# EUROPEAN PATENT APPLICATION

(11) **EP 4 834 983 A1**
(43) Date of publication of application: **04.11.2026**
(21) Application number: 24913033.7
(22) Date of filing: 26.12.2024
(51) Int. Cl.: C08J 11/12, C10B 53/00

(54) **METHOD FOR PRODUCING RECYCLING RESIDUE**

(30) Priority: 28.12.2023 JP 2023223563
(71) Applicant: HIROSAKI UNIVERSITY, Hirosaki-shi, Aomori 036-8560 (JP)
(72) Inventor: YOSHIDA, Akihiro, Hirosaki-shi, Aomori 036-8560 (JP); MOTOMIYA, Takumi, Hirosaki-shi, Aomori 036-8560 (JP); FUKUSAKA, Takeru, Hirosaki-shi, Aomori 036-8560 (JP); SHIRAKAWA, Yuma, Hirosaki-shi, Aomori 036-8560 (JP)
(74) Representative: Vossius & Partner Patentanwälte Rechtsanwälte mbB
(86) International application number: PCT/JP2024/046232
(87) International publication number: WO 2025/143147

(57) **Abstract**

A method for producing a residue for recycling comprises causing a depolymerization agent for a polymer having ester bonds (Polymer E) to act on a resin mixture containing Polymer E, thereby generating a depolymerization product; removing the depolymerization product; and obtaining a residue having a reduced content of Polymer E.

## Description

### FIELD OF THE INVENTION

The present invention relates to a method for producing residues for recycling. The present invention also relates to a method for producing a depolymerization product, a method for producing terephthalic acid crystals, a method for producing bis(2-hydroxyethyl) terephthalate crystals, and a method for producing a recycling feedstock.

### BACKGROUND OF THE INVENTION

A wide variety of resin products (e.g., plastic products) are in use today. To meet requirements such as product performance and aesthetic design, resin mixtures (e.g., plastic composite materials) combining two or more different polymeric materials are commonly used. Furthermore, municipal solid waste typically contains mixtures of multiple resin types (e.g., plastics).

For reuse and recycling purposes, it is desirable to sort plastic waste by polymer type. However, mechanical or physical separation of resin mixtures (e.g., plastic composite materials) or plastic waste on a polymer-by-polymer basis is difficult, necessitating chemical separation methods.

Non-Patent Literature 1 describes that thermal decomposition (pyrolysis) can convert waste plastics that cannot be processed by mechanical recycling into oil and gas; however, poly(vinyl chloride) (PVC) and polyethylene terephthalate (PET) generate corrosive gases and sublimable substances during pyrolysis, which can degrade the quality of pyrolysis products and damage processing plants. Non-Patent Literature 2 describes that a synergistic effect on the dechlorination of plastics was observed by combining acidic β-zeolite and alkaline hydrotalcite at a 1:1 ratio.

The present inventors' group previously reported that terephthalic acid derivatives could be recovered from spent PET and PVC, and that PET could be re-polymerized from those derivatives (Non-Patent Literature 3).

### CITATION LIST

### Non-Patent Literature

Non-Patent Literature 1: Journal of the Japan Petroleum Institute, 59(6), 243-253 (2016), Toshiaki Yoshioka et al., "Feedstock Recycling via waste Plastic Pyrolysis"
Non-Patent Literature 2: Fuel Processing Technology 248 (2023) 107823, Petr Koutnik et al., "Dechlorination during pyrolysis of plastics: Effect of municipal plastic waste composition"
Non-Patent Literature 3: Abstracts of the 33rd Annual Conference of the Japan Society of Material Cycles and Waste Management (Online), "Mechanism of terephthalic acid derivative formation by co-thermal reaction of PET-PVC and re-polymerization of products into PET," Akihiro Yoshida et al., published 29 August 2022, https://www.jstage.jst.go.jp/article/jsmcwm/33/0/33_327/_article/-char/ja

### SUMMARY OF THE INVENTION

### PROBLEM STATEMENT

This invention addresses the following problems: (1) to provide a method for producing a residue for recycling from a resin mixture containing a polymer having ester bonds (hereinafter also referred to as "Polymer E"), wherein generation of carboxylic acid upon decomposition is sufficiently reduced; (2) to provide a method for producing a depolymerization product from a resin or its residue containing Polymer E, such that the depolymerization product containing a carboxylic acid or a derivative thereof is produced in a manner that facilitates separation and recovery; (3) to provide a method for producing crystals of terephthalic acid (TPA) or bis(2-hydroxyethyl) terephthalate (BHET) from a resin mixture containing a reaction product of a diol and terephthalic acid; (4) to provide a method for producing a recycling feedstock containing TPA, mono(2-chloroethyl) terephthalate (MCET), or bis(2-chloroethyl) terephthalate (BCET) from a resin containing PET.

**DETAILED DESCRIPTION OF THE INVENTION**

The present disclosure provides the inventions set forth in [1] through [36] below.
[1] A method for producing a residue for recycling, comprising: applying a resin mixture comprising a polymer having ester bonds (Polymer E) with a depolymerization agent for Polymer E, thereby generating a depolymerization product; removing the depolymerization product; and recovering a residue having a reduced content of Polymer E.

The residue for recycling produced by the method of [1] has a sufficiently reduced level of carboxylic acid generation upon decomposition. Carboxylic acids are acidic substances that corrode manufacturing equipment; however, because carboxylic acid generation is suppressed in the above residue, corrosion of manufacturing equipment is suppressed even when the residue is subjected to processes such as heating or chemical reactions for recycling purposes.

The residue for recycling is a residue having a reduced content of Polymer E. The phrase "having a reduced content of Polymer E" means that the content of Polymer E in the residue is lower than the content of Polymer E in an equal mass of the resin mixture comprising Polymer E. The content of Polymer E is reduced by applying the resin mixture comprising Polymer E with the depolymerization agent for Polymer E.

[2] The production method according to [1], wherein the depolymerization agent comprises at least one selected from the group consisting of hydrogen chloride and chlorine.

In the case of [2], depolymerization of Polymer E can be performed more efficiently.

[3] The production method according to claim [1] or [2], wherein the resin mixture comprises a polymer having chlorine atoms (Polymer C), and the depolymerization agent comprises hydrogen chloride generated by thermal decomposition of Polymer C.

In the case of claim [3], for example, thermal decomposition of Polymer C by heating generates hydrogen chloride derived from Polymer C, which can then function as a depolymerization agent for Polymer E.

[4] The production method according to any one of claims [1] to [3], wherein the depolymerization product is a carboxylic acid or a derivative thereof.

[5] The production method according to any one of claims [1] to [4], wherein the depolymerization product is removed in a gaseous state.

[6] The production method according to any one of claims [1] to [5], wherein Polymer E is a polyester.

[7] The production method according to any one of claims [1] to [6], wherein the resin mixture is applied with the depolymerization agent for Polymer E in a heated state.

[8] The production method according to claim [7], wherein the heated state is 600°C or below.

In the case of claims [4] to [5], the residue for recycling can be produced more efficiently.

[9] A method for producing a depolymerization product comprising a carboxylic acid or a derivative thereof from a resin comprising a polymer having ester bonds (Polymer E), the method comprising: applying the resin with a depolymerization agent for Polymer E, thereby generating the depolymerization product in a gaseous state; separating the gaseous depolymerization product from the depolymerization reaction system; and condensing the separated depolymerization product as a solid.

The phrase "separated from the depolymerization reaction system" means irreversibly removed to a region where participation in the depolymerization reaction is no longer possible. A "region where participation in the depolymerization reaction is no longer possible" means a region beyond the reach of the conversion between reactants and products brought about by the depolymerization reaction.

The depolymerization product produced by the method of claim [9] is easy to separate and recover from the resin or a residue thereof. For example, when a depolymerization product condenses or sublimates within the depolymerization reaction system, it may scatter upon recovery and come into contact with the resin, making separation difficult. In the method of claim [9], however, the depolymerization product that has been separated from the depolymerization reaction system is recovered, thereby facilitating its separation and recovery from the resin or a residue thereof.

Furthermore, since the depolymerization product produced by the method of claim [9] has been separated from the depolymerization reaction system, it can be recovered without stopping the depolymerization reaction, thereby enabling efficient production thereof.

Additionally, the depolymerization product produced by the method of claim [9] has high whiteness (WI) and low yellowness (YI). This is believed to be because the depolymerization product, having been separated from the depolymerization reaction system, is not affected by it, or is less likely to be affected by it. For example, a depolymerization product may become discolored under high-temperature conditions; however, since the depolymerization product has been separated from the depolymerization reaction system, it does not become discolored, or resists discoloration, even when the depolymerization reaction system is at a high temperature.

[10] The production method according to claim [9], wherein the resin contained in a first vessel is applied with the depolymerization agent for Polymer E, and the depolymerization product in a gaseous state is directed into a second vessel, thereby separating the depolymerization product from the depolymerization reaction system.

In the case of claim [10], separation and recovery of the depolymerization product from the resin or a residue thereof is further facilitated.

[11] The production method according to claim [10], wherein the polymerization agent is directed into the second vessel together with the depolymerization product, and at least a portion of the depolymerization agent directed into the second vessel is returned in a gaseous state to the first vessel.

In the case of claim [11], the reduction in the amount of depolymerization agent in the depolymerization reaction system of the first vessel resulting from transfer of the depolymerization agent to the second vessel can be minimized, thereby enabling the depolymerization reaction to be performed more efficiently. Specifically, the depolymerization reaction can be proceeded with a smaller amount of depolymerization agent and at a faster reaction rate.

[12] The production method according to any one of claims [9] to [12], wherein the depolymerization agent comprises at least one selected from the group consisting of hydrogen chloride and hydrogen.

[13] The production method according to any one of claims [9] to [11], wherein the resin is a resin mixture comprising a polymer having chlorine atoms (Polymer C), and the depolymerization agent is obtained from thermal decomposition of Polymer C.

In the case of claim [13], for example, thermal decomposition of Polymer C by heating generates hydrogen chloride derived from Polymer C, which can then function as a depolymerization agent for Polymer E.

[14] The production method according to any one of claims [9] to [13], wherein Polymer E is a polyester.

[15] The production method according to any one of claims [9] to [14], wherein the depolymerization agent for Polymer E is applied with the resin in a heated state.

[16] The production method according to claim [15], wherein the heated state is 600°C or below.

In the case of claims [13] to [16], the depolymerization product can be produced more efficiently.

[17] A method for producing terephthalic acid crystals, comprising: applying a resin comprising a reaction product of a diol and terephthalic acid with hydrogen chloride, thereby generating a depolymerization product comprising terephthalic acid and an ester of a chloroalcohol in which one hydroxyl group of the diol is substituted with a chlorine atom; hydrolyzing the ester in the depolymerization product so as to increase the content of terephthalic acid in the depolymerization product; and crystallizing the terephthalic acid during and/or after the hydrolysis.

The production method of claim [17] can produce TPA crystals having a purity of 50 mol% or more, 70 mol% or more, 90 mol% or more, 95 mol% or more, or 100 mol%. Furthermore, the production method of claim [17] can produce TPA crystals having a whiteness index (WI) of 50 or more, 60 or more, 70 or more, or 80 or more. Additionally, the production method of claim [17] can produce TPA crystals having a yellowness index (YI) of 50 or less, 40 or less, 30 or less, or 20 or less. Purity means the percentage (%) of the molar amount of TPA contained in the crystals as determined by HPLC, relative to the value obtained by dividing the mass of the crystals by the molecular weight of TPA. Unless otherwise specified, purity values in the following description are determined in the same manner.

In the present specification, WI and YI were measured using a spectrophotometric colorimeter SQ7700 (manufactured by Nippon Denshoku Industries Co., Ltd.). Specifically, the sample was densely packed into an optical glass vessel, and white light was irradiated through a 6 mm aperture from the bottom face of the vessel using the SQ7700. WI and YI were then calculated based on the wavelength spectrum of the reflected light. Prior to measurement, calibration was performed so that the WI and YI values obtained using a standard white reference plate were 100 and 0, respectively.

The production method of claim [17] can obtain TPA crystals in a yield of 10% or more, 30% or more, 60% or more, or 80% or more. The above yield refers to the percentage (%) of the molar amount of TPA in the crystals relative to the total molar amount of TPA in the depolymerization product when BCET and MCET contained therein are hydrolyzed and converted to TPA.

[18] The production method according to claim [17], wherein the resin is polyethylene terephthalate, and the ester is mono(2-chloroethyl) terephthalate and bis(2-chloroethyl) terephthalate.

[19] The production method according to claims [17] or [18], wherein the depolymerization product is hydrolyzed in a heated solvent containing water.

[20] The production method according to claim [19], wherein the solvent is an aprotic polar solvent.

In the case of claims [18] to [20], TPA crystals can be produced more efficiently.

[21] A method for producing bis(2-hydroxyethyl) terephthalate crystals, comprising: applying a resin comprising a reaction product of a diol and terephthalic acid with hydrogen chloride, thereby generating a depolymerization product comprising terephthalic acid and an ester of a chloroalcohol in which one hydroxyl group of the diol is substituted with a chlorine atom; subjecting the depolymerization product to esterification or transesterification, thereby generating bis(2-hydroxyethyl) terephthalate; and crystallizing the bis(2-hydroxyethyl) terephthalate.

The depolymerization product contains no BHET, or only negligible amounts thereof; however, in the BHET crystals obtained by the production method of claim [21], the percentage of the molar amount of BHET relative to the total molar amount of TPA, the chloroalcohol ester in which one hydroxyl group of the diol is substituted with a chlorine atom, and BHET can be 20 mol% or more, 50 mol% or more, or 90 mol% or more. The molar amounts of TPA, the chloroalcohol ester, and BHET are values determined by HPLC. Unless otherwise specified, the molar amounts in the following description are determined in the same manner.

[22] The production method according to claim [21], wherein the resin is polyethylene terephthalate, and the ester comprises mono(2-chloroethyl) terephthalate and bis(2-chloroethyl) terephthalate.

[23] The production method according to claim [21] or [22], wherein the esterification or transesterification of the depolymerization product is performed with ethylene glycol.

[24] The production method according to claim [23], wherein the esterification or transesterification of the depolymerization product is performed in heated ethylene glycol.

In the case of claims [22] to [24], BHET crystals can be produced more efficiently.

[25] A method for producing a recycling feedstock comprising bis(2-chloroethyl) terephthalate (BCET), comprising: applying a depolymerization product with a solvent, the depolymerization product being generated by applying a resin comprising polyethylene terephthalate with hydrogen chloride and comprising terephthalic acid, mono(2-chloroethyl) terephthalate (MCET), and BCET; removing an insoluble matter comprising the terephthalic acid and the MCET; and obtaining the BCET dissolved in the solvent; wherein the solubility of terephthalic acid, MCET, and BCET in the solvent is 1 mass% or less, 3 mass% or less, and 3 mass% or more, respectively.

The production method of claim [25] can produce a recycling feedstock comprising BCET but containing no TPA or MCET, or only negligible amounts thereof.

[26] The production method according to claim [25], wherein the solvent is at least one solvent selected from the group consisting of aromatic hydrocarbon solvents, aliphatic hydrocarbon solvents, and ether solvents.

[27] A method for producing a recycling feedstock comprising mono(2-chloroethyl) terephthalate (MCET), comprising: applying a depolymerization product with a first solvent, the depolymerization product being generated by applying a resin comprising polyethylene terephthalate with hydrogen chloride and comprising terephthalic acid, MCET, and BCET; separating the BCET dissolved in the first solvent from an insoluble matter comprising the terephthalic acid and the MCET that is insoluble in the first solvent; applying the insoluble matter with a second solvent; removing an insoluble matter comprising the terephthalic acid that is insoluble in the second solvent; and obtaining the MCET dissolved in the second solvent; wherein the solubility of terephthalic acid, MCET, and BCET in the first solvent is 1 mass% or less, 3 mass% or less, and 3 mass% or more, respectively; and the solubility of terephthalic acid and MCET in the second solvent is 1 mass% or less and 1 mass% or more, respectively.

The production method of claim [27] can produce a recycling feedstock comprising MCET but does not contain, or contains negligible amounts of, TPA and BCET.

[28] The production method according to claim [27], wherein the first solvent is at least one solvent selected from the group consisting of aromatic hydrocarbon solvents, aliphatic hydrocarbon solvents, and ether solvents.

[29] The production method according to claim [27] or [28], wherein the second solvent is at least one solvent selected from the group consisting of ether solvents, ketone solvents, ester solvents, and alcohol solvents.

[30] A method for producing a recycling feedstock comprising terephthalic acid, comprising: applying a depolymerization product with a first solvent, the depolymerization product being generated by applying a resin comprising polyethylene terephthalate with hydrogen chloride and comprising terephthalic acid, MCET, and BCET; separating the BCET dissolved in the first solvent from an insoluble matter comprising the terephthalic acid and the MCET that is insoluble in the first solvent; applying the insoluble matter with a second solvent; and obtaining an insoluble matter comprising the terephthalic acid that is insoluble in the second solvent; wherein the solubility of terephthalic acid, MCET, and BCET in the first solvent is 1 mass% or less, 3 mass% or less, and 3 mass% or more, respectively; and the solubility of terephthalic acid and MCET in the second solvent is 1 mass% or less and 1 mass% or more, respectively.

The production method of claim [30] can produce a recycling feedstock comprising TPA but containing no BCET or MCET, or only negligible amounts thereof.

[31] The production method according to claim [30], wherein the first solvent is at least one solvent selected from the group consisting of aromatic hydrocarbon solvents, aliphatic hydrocarbon solvents, and ether solvents.

[32] The production method according to claim [30] or [31], wherein the second solvent is at least one solvent selected from the group consisting of ether solvents, ketone solvents, ester solvents, and alcohol solvents.

[33] A method for producing terephthalic acid crystals, comprising: applying a depolymerization product with a solvent, the depolymerization product being generated by applying a resin comprising polyethylene terephthalate with hydrogen chloride and comprising terephthalic acid, MCET, and BCET; removing an insoluble matter comprising the terephthalic acid and the MCET that is insoluble in the solvent; obtaining the BCET dissolved in the solvent; hydrolyzing the obtained BCET; and crystallizing the terephthalic acid during and/or after the hydrolysis; wherein the solubility of terephthalic acid, MCET, and BCET in the solvent is 1 mass% or less, 3 mass% or less, and 3 mass% or more, respectively.

The production method of claim [33] can produce TPA crystals having a purity of 80 mol% or more, 90 mol% or more, or 95 mol% or more, and in a yield of 50% or more, 60% or more, or 70% or more. The above yield refers to the percentage (%) of the molar amount of TPA in the crystals relative to the molar amount of the BCET.

[34] The production method according to claim [33], wherein the solvent is at least one solvent selected from the group consisting of aromatic hydrocarbon solvents, aliphatic hydrocarbon solvents, and ether solvents.

The production method of claim [34] can further improve the purity and yield described above.

[35] A method for producing terephthalic acid crystals, comprising: applying a depolymerization product with a solvent, the depolymerization product being generated by applying a resin comprising polyethylene terephthalate with hydrogen chloride and comprising terephthalic acid, MCET, and BCET; separating the BCET dissolved in the solvent from an insoluble matter comprising the terephthalic acid and the MCET that is insoluble in the solvent; hydrolyzing the insoluble matter so as to increase the content of terephthalic acid therein; and crystallizing the terephthalic acid during and/or after the hydrolysis; wherein the solubility of terephthalic acid, MCET, and BCET in the solvent is 1 mass% or less, 3 mass% or less, and 3 mass% or more, respectively.

The production method of claim [35] can produce TPA crystals having a purity of 80 mol% or more, 90 mol% or more, or 95 mol% or more; a WI of 50 or more, 60 or more, 70 or more, or 80 or more; and a YI of 30 or less, 20 or less, or 10 or less.

The production method of claim [35] can produce TPA crystals in a yield of 70% or more, 80% or more, or 90% or more. The above yield refers to the percentage (%) of the molar amount of TPA in the crystals relative to the total molar amount of TPA and MCET contained in the insoluble matter.

[36] The production method according to claim [35], wherein the solvent is at least one solvent selected from the group consisting of aromatic hydrocarbon solvents, aliphatic hydrocarbon solvents, and ether solvents.

The production method of claim [36] can further improve the yield described above.

The present disclosure also provides the inventions set forth in [1A] through [10A] below.
[1A]: A method for recycling a plastic comprising a polymer having ester bonds (hereinafter, Polymer (E)) and a polymer having chlorine atoms (hereinafter, Polymer (C)), the method comprising: thermally decomposing the plastic at a temperature equal to or higher than the temperature at which thermal decomposition products are generated from Polymer (C); separating carboxylic acid compounds derived from Polymer (E) and derivatives thereof from the plastic utilizing the pyrolysis products; and obtaining a secondary-use substance in which the content of carboxylic acid compounds derived from Polymer (E) and derivatives thereof has been reduced.
[2A]: The plastic recycling method according to [1A], wherein the thermal decomposition products are chlorine-containing thermal decomposition products.
[3A]: The plastic recycling method according to [1] or [2], wherein the reduction rate of the carboxylic acid compounds and their derivatives is 40 mol% or more.
[4A]: The plastic recycling method according to any one of [1A] to [3A], further comprising reducing the chlorine atom content by 85 mol% or more.
[5A]: The plastic recycling method according to any one of [1A] to [4A], wherein the secondary-use substance mainly comprises carbon (char) and/or a hydrocarbon compound.
[6A]: The plastic recycling method according to any one of [1A] to [5A], wherein the thermal decomposition temperature is 600°C or below.
[7A]: The plastic recycling method according to any one of [1A] to [6A], wherein the carboxylic acid compounds and their derivatives are sublimated and then separated by cooling.
[8A]: The plastic recycling method according to any one of [1A] to [7A], wherein the carboxylic acid compounds and their derivatives are at least one selected from the group consisting of: terephthalic acid; mono(2-chloroethyl) terephthalate; bis(2-chloroethyl) terephthalate; mono(2-chloroethyl) 2,6-naphthalenedicarboxylate; bis(2-chloroethyl) 2,6-naphthalenedicarboxylate; bis(4-chlorobutyl) terephthalate; bis(3-chloropropyl) terephthalate; isophthalic acid; 2,5-furandicarboxylic acid; and derivatives of any of the foregoing.
[9A]: The plastic recycling method according to any one of [1A] to [8A], wherein a polyester resin is re-polymerized using the carboxylic acid compounds and their derivatives, or compounds derived therefrom.
[10A]: A method for obtaining a thermal decomposition residue with a greatly reduced content of acidic substances, comprising: heating a polymer having chlorine atoms (Polymer (C)) and a polymer having ester bonds (Polymer (E)); and separating acidic substances derived from Polymer (C) and Polymer (E) while suppressing generation of chlorine-containing gas.

As described above, there is provided a method for recycling a plastic comprising Polymer (E) having ester bonds, wherein carboxylic acid compounds derived from Polymer (E) and derivatives thereof are reduced from the plastic to obtain a secondary-use substance (e.g., solid fuel, oil conversion feedstock, recycled plastic feedstock), and a method for obtaining a thermal decomposition residue.

Specifically, the embodiments of claims [1A] to [10A] have the excellent effect of providing a method for recycling a plastic comprising Polymer (E) having ester bonds, in which carboxylic acid compounds derived from Polymer (E) and derivatives thereof are reduced from the plastic to obtain a secondary-use substance (e.g., solid fuel, oil conversion feedstock, recycled plastic feedstock), and a method for obtaining a thermal decomposition residue.

### ADVANTAGES OF THE INVENTION

According to the present invention, there can be provided: (1) a method for producing, from a resin mixture comprising Polymer E, a residue for recycling in which generation of carboxylic acid upon decomposition has been sufficiently reduced; (2) a method for producing, from a resin comprising Polymer E or a residue thereof, a depolymerization product comprising a carboxylic acid or a derivative thereof in a manner that facilitates separation and recovery; (3) a method for producing TPA or BHET crystals from a resin mixture comprising a reaction product of a diol and terephthalic acid; or (4) a method for producing a recycling feedstock comprising TPA, MCET, or BCET from a resin comprising PET.

### BRIEF DESCRIPTION OF DRAWINGS

FIG. 1 A flowchart showing one example of the plastic recycling method according to the present embodiment.
FIG. 2 A schematic diagram for explaining one example of a plastic processing apparatus used in the plastic recycling method according to the present embodiment. This figure can also be described as a schematic diagram for explaining one example of an apparatus used in the method for producing a residue for recycling according to the present embodiment.
FIG. 3 A schematic diagram for explaining one example of a plastic processing apparatus used in a plastic recycling method according to a modified example. This figure can also be described as a schematic diagram for explaining one example of an apparatus used in a method for producing a residue for recycling according to a modified example.
FIG. 4 A graph plotting the pressure and temperature inside the reaction vessel over time in the thermal decomposition test of Test Example 19.
FIG. 5 A graph plotting the pressure and temperature inside the reaction vessel over time in the thermal decomposition test of Test Example 20.
FIG. 6 A diagram showing the molecular weight distribution curves of the residue for recycling according to the present embodiment obtained from a resin mixture containing a polymer (Polymer E) and polyethylene, and of the polyethylene.
FIG. 7 A schematic diagram for explaining one example of an apparatus used in the production method for producing a depolymerization product containing a carboxylic acid or a derivative thereof from a resin mixture containing a polymer having ester bonds (Polymer E) according to the present embodiment.
FIG. 8 A schematic diagram for explaining one example of an apparatus used in the production method for producing a residue for recycling according to the present embodiment.
FIG. 9 An HPLC chromatogram of a depolymerization product and crystals obtained by Method 1 for producing TPA crystals according to the present embodiment.
FIG. 10 A ¹H-NMR spectrum of commercially available TPA.
FIG. 11 A ¹H-NMR spectrum of crystals obtained by Method 1 for producing TPA crystals according to the present embodiment.

### DETAILED DESCRIPTION OF EMBODIMENTS

The present disclosure is described in detail below. Other embodiments are also encompassed within the scope of the present disclosure as long as they are consistent with the spirit of the present disclosure. Furthermore, numerical ranges specified in the present specification using "to" include the numerical values stated before and after "to" as the lower and upper limits of the range, respectively. Each of the various components may independently be used singly or in combination of two or more, unless otherwise specified. Numerical values described in the present specification refer to values obtained by the methods described in the Examples section below.

### [Method for Producing Residue for Recycling]

The method for producing a residue for recycling according to the present embodiment comprises causing a depolymerization agent for Polymer E to act on a resin mixture containing Polymer E, thereby generating a depolymerization product; removing the depolymerization product; and obtaining a residue having a reduced content of Polymer E.

The residue for recycling produced from a resin mixture containing Polymer E by the production method according to the present embodiment has a sufficiently reduced level of carboxylic acid generation upon decomposition. The phrase "sufficiently reduced level of carboxylic acid generation upon decomposition" with respect to the residue for recycling means that, when the resin mixture containing Polymer E and the residue for recycling of the same mass are each decomposed by the decomposition method described below, the total amount of substance (mol) of carboxylic acid generated from the residue for recycling is less than that generated from the resin mixture containing Polymer E. For example, the residue for recycling can be said to have a "sufficiently reduced level of carboxylic acid generation upon decomposition" when the value obtained by subtracting from 100 the percentage (%) of the total amount of substance of carboxylic acid generated from the residue for recycling relative to the total amount of substance of carboxylic acid generated from the resin mixture containing Polymer E (expressed as 100%) (hereinafter also referred to as the "reduction rate of carboxylic acid generation upon decomposition (%)") is 1% or more, 10% or more, 20% or more, 40% or more, 60% or more, 80% or more, 90% or more, 95% or more, or 99% or more. Furthermore, when Polymer E is a polyester, the "amount of substance of TPA" can be used in place of the "total amount of substance of carboxylic acid." The total amount of substance of carboxylic acid can be measured by HPLC in a conventional manner. The HPLC conditions may be the same as those used in the Examples described below.

The above-described "decomposition method" involves adding 0.1 g of the target material (resin mixture containing Polymer E or residue for recycling) to 15 mL of methanol, adding 2 mL of a 35 mass% tetrapropylammonium hydroxide aqueous solution, and heating at 75°C for 7 days. This decomposition method can hydrolyze ester bonds.

The resin mixture containing Polymer E may contain two or more types of Polymer E, or may contain one or more types of Polymer E and one or more resins other than Polymer E.

The resin mixture containing Polymer E may be, for example, a material contained in municipal solid waste, clothing, industrial waste, or the like.

Polymer E is a polymer having ester bonds. An ester bond refers to a chemical bond represented by the structural formula R-COO-R' (where R and R' are each a monovalent organic group). Examples of Polymer E include polymers having ester bonds in the main chain, such as polyesters, and polymers having ester bonds in side chains. Polymers having ester bonds in the main chain are preferred, and polyesters are more preferred.

Polyesters that are Polymer E include reaction products of a dicarboxylic acid and a diol. Such reaction products include: polyethylene terephthalate (PET), in which the dicarboxylic acid is terephthalic acid and the diol is ethylene glycol; PET-G, in which the dicarboxylic acid is terephthalic acid and the diol is a mixture of ethylene glycol and 1,4-cyclohexanedimethanol; polyethylene naphthalate (PEN), in which the dicarboxylic acid is 2,6-naphthalenedicarboxylic acid and the diol is ethylene glycol; polyethylene furanoate (PEF), in which the dicarboxylic acid is 2,5-furandicarboxylic acid and the diol is ethylene glycol; polybutylene terephthalate; and polyethylene succinate. Reaction products of terephthalic acid and a diol are preferred, and PET is more preferred.

Dicarboxylic acids in the dicarboxylic acid-diol reaction product, in addition to those described above, include, for example: malonic acid, succinic acid, glutaric acid, adipic acid, suberic acid, sebacic acid, dodecanedioic acid, eicosanedioic acid, pimelic acid, azelaic acid, adamantanedicarboxylic acid, norbornenedicarboxylic acid, cyclohexanedicarboxylic acid, decalindicarboxylic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-biphenyldicarboxylic acid, 4,4'-diphenyl ether dicarboxylic acid, 5-sodium sulfoisophthalic acid, phenylendan dicarboxylic acid, anthracenedicarboxylic acid, phenanthrenedicarboxylic acid, and 9,9'-bis(4-carboxyphenyl)fluorene acid.

Diols in the dicarboxylic acid-diol reaction product may be alkylene diols. Examples of alkylene diols include those having 2 to 5, 2 to 4, or 2 to 3 carbon atoms.

Diols in the dicarboxylic acid-diol reaction product, in addition to those described above, include, for example: 1,2-propanediol, 1,3-propanediol, butanediol, 2-methyl-1,3-propanediol, hexanediol, neopentyl glycol, cyclohexanedimethanol, cyclohexanediethanol, decahydronaphthalenedimethanol, decahydronaphthalenediethanol, norbornanedimethanol, norbornanediethanol, tricyclodecanedimethanol, tricyclodecaneethanol, tetracyclododecanedimethanol, tetracyclododecanediethanol, decalindimethanol, decalindiethanol, 5-methylol-5-ethyl-2-(1,1-dimethyl-2-hydroxyethyl)-1,3-dioxane, cyclohexanediol, bicyclohexyl-4,4'-diol, 2,2-bis(4-hydroxycyclohexylpropane), 2,2-bis(4-(2-hydroxyethoxy)cyclohexyl)propane, cyclopentanediol, 3-methyl-1,2-cyclopentanediol, 4-cyclopentene-1,3-diol, adamandiol, para-xylene glycol, bisphenol A, bisphenol S, styrene glycol, and bis-β-hydroxyethyl terephthalate (BHET).

Polyesters that are Polymer E may also be reaction products of an esterified dicarboxylic acid, a dicarboxylic acid chloride, or a dicarboxylic acid anhydride with a diol.

In the resin mixture containing Polymer E, the upper limit of the content of Polymer E, based on the total mass of the resin mixture, may be 5 mass% or more, 10 mass% or more, 20 mass% or more, 30 mass% or more, 40 mass% or more, 50 mass% or more, 60 mass% or more, 70 mass% or more, 80 mass% or more, 90 mass% or more, or 95 mass% or more. The lower limit of the content of Polymer E in the resin mixture containing Polymer E, based on the total mass of the resin mixture, may be 95 mass% or less, 90 mass% or less, 80 mass% or less, 70 mass% or less, 60 mass% or less, 50 mass% or less, 40 mass% or less, 30 mass% or less, 20 mass% or less, 10 mass% or less, or 5 mass% or less. These upper and lower limits can be freely combined as long as the upper limit is greater than the lower limit.

Resins other than Polymer E include: Polymer C; olefin-based resins such as polyethylene and polypropylene (meaning homopolymers of olefins, copolymers of different olefins, and copolymers of an olefin with a compound having an ethylenically unsaturated group other than an olefin); polystyrene; polyurethane; polymethyl methacrylate; vinyl acetate resin; polycarbonate; ABS resin; polyphenol; polyamide; polyacetal; fluororesin; melamine resin; epoxy resin; polyimide; and polyvinyl alcohol. Polymer C or an olefin-based resin is preferred, and Polymer C or polyethylene is more preferred. Naturally, the resin mixture containing Polymer E need not contain Polymer C.

Polymer C is a polymer having chlorine atoms and typically has chlorine atoms in its side chains. Examples of Polymer C include poly(vinyl chloride) (PVC), poly(vinylidene chloride), chlorinated polyethylene, polychloroprene, and chlorinated natural rubber. PVC is preferred from the viewpoint of efficiently generating hydrogen chloride.

Polymer C may also be a reaction product of vinyl chloride (CH₂=CHCl) with a compound having an ethylenically unsaturated group. Examples of compounds having an ethylenically unsaturated group include: vinyl esters such as vinyl acetate and vinyl propionate; acrylic esters such as methyl acrylate and butyl acrylate; methacrylic esters such as methyl methacrylate and ethyl methacrylate; maleic esters such as butyl maleate and diethyl maleate; vinyl ethers such as vinyl methyl ether, vinyl butyl ether, and vinyl octyl ether; vinyl cyanides such as acrylonitrile and methacrylonitrile; α-olefins such as ethylene and propylene; styrenes and substituted derivatives thereof such as styrene, α-methylstyrene, vinyltoluene, t-butylstyrene, and chlorostyrene; vinylidene halides and vinyl halides other than vinyl chloride such as vinylidene chloride and vinyl bromide; and the like.

When the resin mixture containing Polymer E contains Polymer C, the lower limit of the content of Polymer C in the resin mixture containing Polymer E, based on the total mass of the resin mixture, may be 5 mass% or more, 10 mass% or more, 20 mass% or more, 30 mass% or more, 40 mass% or more, 50 mass% or more, 60 mass% or more, 70 mass% or more, 80 mass% or more, 90 mass% or more, or 95 mass% or more. The upper limit of the content of Polymer C may be 95 mass% or less, 90 mass% or less, 80 mass% or less, 70 mass% or less, 60 mass% or less, 50 mass% or less, 40 mass% or less, 30 mass% or less, 20 mass% or less, 10 mass% or less, or 5 mass% or less. These upper and lower limits can be freely combined as long as the upper limit is greater than the lower limit.

When the resin mixture containing Polymer E contains Polymer C, the mass ratio of Polymer E to Polymer C in the resin mixture may be 1:8 to 16:1, 1:8 to 8:1, 1:4 to 12:1, 1:2 to 8:1, 1:1 to 7:1, 2:1 to 6:1, 1:1, 2:1, 3:1, 4:1, 5:1, 6:1, or 7:1. When Polymer E is PET and Polymer C is PVC, the mass ratio of PET to PVC may be 1:1 to 6:1 or 2:1 to 3:1. Furthermore, the molar ratio of groups derived from carboxylic acid in Polymer E to chlorine atoms in Polymer C in the resin mixture may be 2:1 to 1:6, or 1:1 to 1:2.

In the resin mixture containing Polymer E, the lower limit of the content of olefin-based resin, based on the total mass of the resin mixture, may be 5 mass% or more, 10 mass% or more, 20 mass% or more, 30 mass% or more, 40 mass% or more, 50 mass% or more, 60 mass% or more, 70 mass% or more, 80 mass% or more, 90 mass% or more, or 95 mass% or more. The upper limit of the content of olefin-based resin may be 95 mass% or less, 90 mass% or less, 80 mass% or less, 70 mass% or less, 60 mass% or less, 50 mass% or less, 40 mass% or less, 30 mass% or less, 20 mass% or less, 10 mass% or less, or 5 mass% or less. These upper and lower limits can be freely combined as long as the upper limit is greater than the lower limit.

In addition to the resins described above, the resin mixture containing Polymer E may contain other components, such as: components used during resin synthesis, such as catalysts and initiators; additives for imparting specific functions to the resin (e.g., flame retardants, antistatic agents, plasticizers, UV stabilizers, fillers, etc.); and, when the resin mixture is contained in municipal solid waste, clothing, industrial waste, or the like, materials derived therefrom (e.g., blended fibers, cellulose, fibers such as nylon, metals, concrete, wood, building materials, water, organic solvents, dyes, coatings, etc.). The total content of such other components in the resin mixture containing Polymer E, based on the total mass of the resin mixture, may be 10 mass% or less, 5 mass% or less, 1 mass% or less, or 0.1 mass% or less.

Examples of depolymerization agents for Polymer E include accelerators capable of decomposing (e.g., hydrolyzing) the ester bonds of Polymer E. Such depolymerization agents include, for example, hydrogen chloride (hydrogen chloride gas), chlorine (chlorine gas), and radicals. At least one selected from the group consisting of hydrogen chloride and chlorine is preferred, and hydrogen chloride is more preferred.

When the resin mixture containing Polymer E contains Polymer C, at least a portion of the depolymerization agent for Polymer E may be generated by thermal decomposition of Polymer C. Products generated by thermal decomposition of Polymer C include hydrogen chloride (hydrogen chloride gas), chlorine (chlorine gas), and radicals. Hydrogen chloride is preferred. The radical species include radical species generated by cleavage of C-Cl bonds in Polymer C.

Thermal decomposition of Polymer C can be carried out, for example, by heating the resin mixture containing Polymer E. The heating temperature can be set appropriately depending on the type of Polymer E and other factors; the lower limit may be 170°C or more, 200°C or more, 250°C or more, or 300°C or more, and the upper limit may be 600°C or less, 500°C or less, or 450°C or less. These conditions and limits can be freely combined. When Polymer E is PVC, the heating temperature may be 170-180°C.

The manner in which the depolymerization agent for Polymer E is caused to act on the resin mixture containing Polymer E is not particularly limited, provided that a depolymerization product is generated. For example, from the viewpoint of efficiently generating the depolymerization product, the depolymerization agent may be caused to act on the resin mixture in a heated state. The heated state may be, for example, 600°C or below, 500°C or below, or 450°C or below, and may be 170°C or more, 200°C or more, 250°C or more, or 300°C or more. The time during which the depolymerization agent for Polymer E is caused to act on the heated resin mixture may be 1 to 60 hours, 2 to 55 hours, 5 to 50 hours, 10 to 45 hours, 15 to 40 hours, 20 to 35 hours, or 25 to 30 hours.

Furthermore, the depolymerization agent for Polymer E may be caused to act on the resin mixture under vacuum. For example, the resin mixture containing Polymer E may be placed in a vacuum container, and the depolymerization agent may be supplied to that container. In this specification, a pressure of 1 kPa or less can be considered to constitute a vacuum.

The depolymerization agent for Polymer E is not particularly limited as long as it can depolymerize Polymer E, and may be a commercially available depolymerization agent (e.g., a depolymerization agent contained in a gas cylinder), or a depolymerization agent such as hydrogen chloride generated by thermal decomposition of Polymer C.

Furthermore, when the resin mixture containing Polymer E contains a resin other than Polymer E, the heated state may be set to a temperature at which the resin does not undergo thermal decomposition, or undergoes negligible thermal decomposition. In this case, a residue for recycling can be produced that contains the resin in a state in which thermal decomposition has not proceeded, or has barely proceeded (i.e., the molecular weight has not decreased, or has barely decreased).

When a depolymerization agent capable of decomposing the ester bonds of Polymer E acts on Polymer E, the decomposition of the ester bonds can produce an alcohol, and a carboxylic acid or a derivative of a carboxylic acid. The alcohol may decompose into hydrogen gas, an alkene, water, or the like when heated.

The depolymerization product varies depending on the composition of the resin mixture containing Polymer E and other factors. The depolymerization product typically contains a carboxylic acid or a derivative thereof derived from Polymer E, in which case it can be referred to as a "depolymerization product containing a carboxylic acid or a derivative thereof." For example, when the resin mixture contains PET as Polymer E, the depolymerization product typically contains terephthalic acid, MCET, and BCET. When the resin mixture contains PEN as Polymer E, the depolymerization product typically contains naphthalenedicarboxylic acid, mono(2-chloroethyl) 2,6-naphthalenedicarboxylate, and bis(2-chloroethyl) 2,6-naphthalenedicarboxylate. When the resin mixture contains polybutylene terephthalate as Polymer E, the depolymerization product typically contains terephthalic acid and bis(4-chlorobutyl) terephthalate. When the resin mixture contains polypropylene terephthalate as Polymer E, the depolymerization product typically contains terephthalic acid and bis(3-chloropropyl) terephthalate.

As described above, the carboxylic acid contained in the depolymerization product may be at least one selected from the group consisting of terephthalic acid, naphthalenedicarboxylic acid, 2,6-naphthalenedicarboxylic acid, mono(2-chloroethyl) terephthalate, and mono(2-chloroethyl) 2,6-naphthalenedicarboxylate.

Derivatives of carboxylic acids contained in the depolymerization product include esters of a carboxylic acid with a halogenated alcohol, the esters having no carboxyl group. The halogenated alcohol is a chlorinated alcohol. The number of carbon atoms of the halogenated alcohol may be 2 to 10 or 2 to 4. The number of halogen atoms in the halogenated alcohol may be 1 to 2 or 1. Examples of the halogenated alcohol include 2-chloroethanol, 3-chloropropanol, and 4-chlorobutanol. The carboxylic acid may be the same as the carboxylic acid contained in the depolymerization product described above.

As described above, the derivative of the carboxylic acid contained in the depolymerization product may be at least one selected from the group consisting of bis(2-chloroethyl) terephthalate, bis(2-chloroethyl) 2,6-naphthalenedicarboxylate, bis(4-chlorobutyl) terephthalate, and bis(3-chloropropyl) terephthalate.

The depolymerization product may be removed, for example, by removing it in a gaseous state. In one such method, the depolymerization product generated by the depolymerization reaction is separated from the depolymerization reaction system in a gaseous state, condensed or sublimated, and the resulting solid or liquid depolymerization product is discarded. Examples of methods of effecting such separation include transporting the depolymerization product in a gaseous state by means of a gas flow.

When heated during the production process, the residue for recycling contains char, hydrocarbon compounds, and the like. Furthermore, when the resin mixture containing Polymer E contains a resin other than Polymer E as described above, the residue for recycling may contain that resin or its depolymerization products and the like.

As described above, since the residue for recycling has a sufficiently reduced level of carboxylic acid generation upon decomposition, it can be suitably used as a solid fuel, oil/fat feedstock, liquefied fuel, or the like.

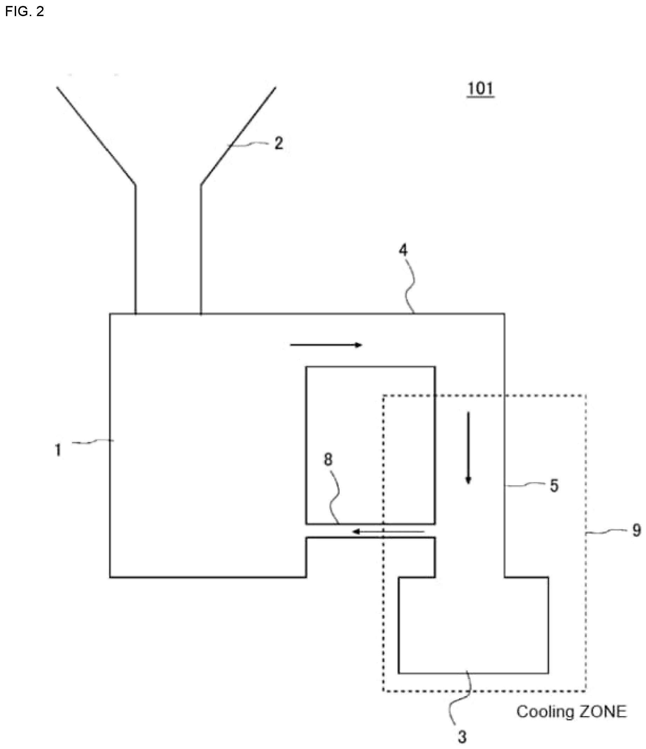

### Apparatus Example 1 (Fig. 2)

Next, one example of the production method for a residue for recycling according to the present embodiment is described with reference to FIG. 2. The production method described below is merely one aspect of the present embodiment, and the present embodiment is not limited to the content below.

FIG. 2 shows one example of an apparatus for producing a residue for recycling. Apparatus 101 shown in FIG. 2 comprises: a pyrolysis furnace 1; a plastic (resin mixture) supply port 2 connected to the pyrolysis furnace 1; a trap unit 3 for sublimated substances (depolymerization products); and pipes 4, 5, and 8 connecting the pyrolysis furnace 1 and the trap unit 3. In apparatus 101, gas circulates in the direction of the arrows in the figure (in the order: pyrolysis furnace 1 → pipe 4 → pipe 5 → trap unit 3 for sublimated substances → pipe 8 → pyrolysis furnace 1) by means of a gas suction device such as a pump.

The supply port 2 can be opened and closed freely, and the resin mixture containing Polymer E can be charged from outside into the pyrolysis furnace 1 through the supply port 2 as appropriate.

By housing the resin mixture in the pyrolysis furnace 1 and supplying a depolymerization agent thereto, the depolymerization agent can be caused to act on the resin mixture, thereby generating a depolymerization product and a residue. At this time, by externally heating the first container, the depolymerization reaction can be promoted, and the depolymerization product can be maintained in a gaseous state. The supply of the depolymerization agent to the pyrolysis furnace 1 may come from an external source. In that case, the supply source may be a gas cylinder containing the depolymerization agent, a container housing Polymer C, or the like. Heating the container housing Polymer C allows the generation of a depolymerization agent such as hydrogen chloride.

When the resin mixture contains Polymer C, the Polymer C may be thermally decomposed by externally heating the pyrolysis furnace 1, and the depolymerization agent such as hydrogen chloride generated thereby may drive the depolymerization reaction. In this case, the depolymerization agent may or may not be supplied from outside the first container.

When the generated depolymerization product is in a gaseous state, it is guided through pipes 4 and 5 to the trap unit 3 by the gas flow created by the gas suction device. At this time, to maintain the gaseous state of the depolymerization product, pipe 4 and pipe 5 may be externally heated, the circulation flow rate may be increased, or similar measures may be taken.

The depolymerization product in a gaseous state that is guided to trap unit 3 is cooled in trap unit 3, whereby it condenses or sublimated to become a liquid or solid and accumulates in trap unit 3. By recovering the accumulated depolymerization product in this manner, the depolymerization product can be removed from the residue.

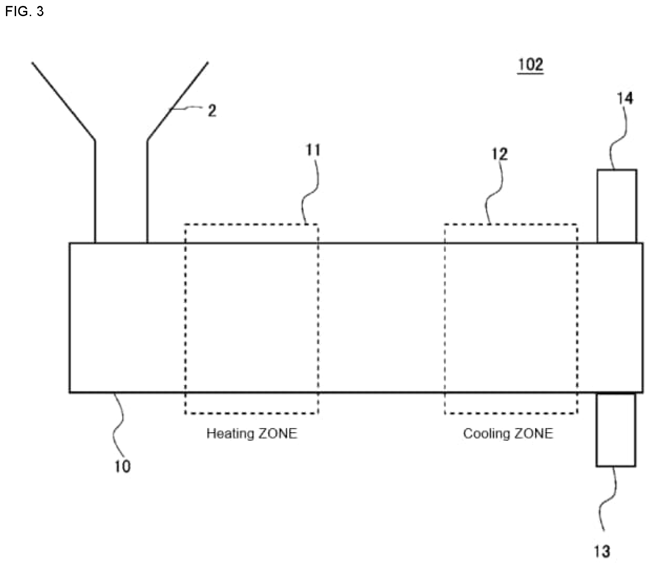

### Apparatus Example 2 (Fig. 3)

Next, another example of the production method for a residue for recycling according to the present embodiment is described with reference to FIG. 3. The production method described below is merely one aspect of the present embodiment, and the present embodiment is naturally not limited to the content below.

FIG. 3 shows another example of an apparatus for producing a residue for recycling. Apparatus 102 shown in FIG. 3 comprises: a horizontal processing furnace 10; a plastic (resin mixture) supply port 2 connected to the horizontal processing furnace 10; and a pyrolysis residue outlet 13 and an exhaust port 14 connected to the side of the horizontal processing furnace 10 opposite to the supply port in the longitudinal direction. The exhaust port 14 is connected to the top surface of the processing furnace 10, and outlet 13 is connected to the bottom surface. The horizontal processing furnace 10 has a heating zone 11 and a cooling zone 12, with the heating zone 11 positioned between the cooling zone 12 and the supply port 2. In apparatus 102, since the exhaust port 14 draws in gas, the gas flows from the supply port 2 to the exhaust port 14.

The supply port 2 can be opened and closed freely, and the resin mixture containing Polymer E can be charged from outside into the processing furnace 10 through the supply port 2 as appropriate. A depolymerization agent can also be charged into the horizontal processing furnace 10. The depolymerization agent can act on the resin mixture, for example in the heating zone 11, thereby generating a depolymerization product and a residue. At this time, the depolymerization product in heating zone 11 can be maintained in a gaseous state by being heated. The depolymerization product in a gaseous state is solidified or sublimated in the cooling zone. Thereby, the depolymerization product can be removed from the residue.

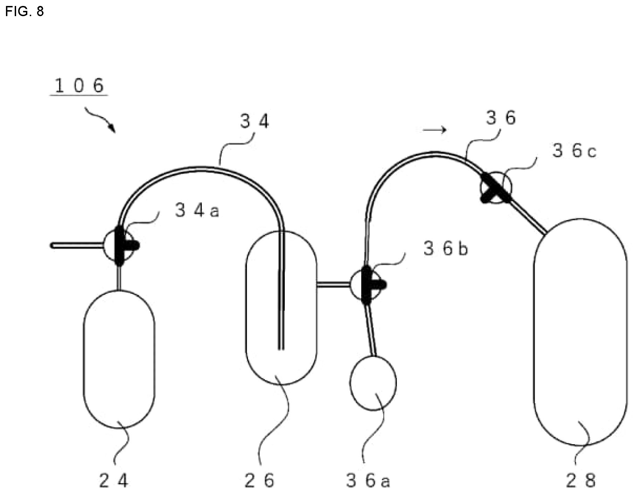

### Apparatus Example 3 (Fig. 8)

Next, another example of the production method for a residue for recycling according to the present embodiment is described with reference to FIG. 8. The production method described below is merely one aspect of the present embodiment, and the present embodiment is not limited to the content below.

FIG. 8 shows another example of an apparatus for producing a residue for recycling. Apparatus 106 shown in FIG. 8 comprises: a third container 24, a fourth container 26, a fifth container 28, a third communication pipe 34 connecting the third container 24 and the fourth container 26, and a fourth communication pipe 36 connecting the fourth container 26 and the fifth container 28.

The third communication pipe 34 is equipped with a stopcock 34a. By operating stopcock 34a, communication between the third container 24 and the fourth container 26 can be opened or closed.

The fourth communication pipe 36 is equipped with a pump 36a, a stopcock 36b, and a stopcock 36c. By operating pump 36a, gas can be guided from stopcock 36b into the fifth container 28. By operating stopcocks 36b and 36c, communication between the fourth container 26 and pump 36a, between the fourth container 26 and the fifth container 28, and between pump 36a and the fifth container 28 can each be independently opened or closed.

By evacuating apparatus 106 to vacuum, housing Polymer C in the third container 24, opening stopcock 34a, closing stopcock 36b, and heating the third container 24, Polymer C is thermally decomposed, hydrogen chloride is generated, and the third container 24 and fourth container 26 can be filled with hydrogen chloride. At this time, by cooling the fourth container 26 to -40 to -80°C, impurities other than hydrogen chloride generated by thermal decomposition of Polymer C can be solidified, sublimated, or otherwise retained in the fourth container 26. Subsequently, by operating stopcock 36b to open communication among the fourth container 26, pump 36a, and the fifth container 28, and operating pump 36a, the hydrogen chloride in the fourth container 26 can be guided into the fifth container 28. By housing the resin mixture containing Polymer E in the fifth container 28 in advance, the hydrogen chloride thus guided into the fifth container 28 as described above can be caused to act on the resin mixture containing Polymer E, generating a depolymerization product and a residue. When causing the hydrogen chloride to act on the resin mixture containing Polymer E, stopcock 36b can be set to a closed state, and the fifth container 28 can be externally heated. The generated depolymerization product and residue can be recovered.

As one embodiment of the production method for a residue for recycling according to the present embodiment, Embodiment A below can be cited. The content described in Embodiment A can be freely incorporated into the production method for a residue for recycling according to the present embodiment described above, and the content described in the production method for a residue for recycling according to the present embodiment can be freely incorporated into Embodiment A. In Embodiment A below, "plastic" can be read as "resin."

### [Embodiment A]

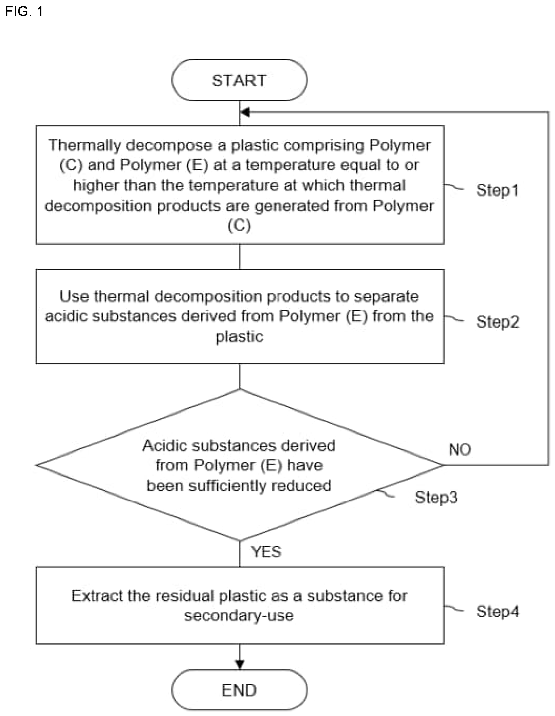

FIG. 1 shows one example of a flowchart for the plastic recycling method of the present embodiment. The plastic recycling method thermally decomposes a plastic comprising a polymer having chlorine atoms (Polymer (C)) and a polymer having ester bonds (Polymer (E)) at a temperature equal to or higher than the temperature at which thermal decomposition products are generated from Polymer (C) (Step 1). Furthermore, by this thermal decomposition, Polymer (E) is decomposed using the thermal decomposition products generated from Polymer (C), and acidic substances comprising carboxylic acid compounds derived from Polymer (E) and their derivatives (hereinafter also simply referred to as "acidic substances") are separated from the plastic (Step 2). Then, it is confirmed whether the acidic substances derived from Polymer (E) in the plastic have been sufficiently reduced (Step 3); if the reduction is insufficient, Steps 1 and 2 are continued; and when sufficient reduction of the acidic substances has been achieved, the plastic residue is extracted as a secondary-use substance (Step 4). Note that Step 3 is not essential, and it is sufficient to have at least Steps 1, 2, and 4.

In addition to reducing carboxylic acid compounds derived from Polymer (E) and their derivatives, which are acidic substances derived from Polymer (E), from the residual plastic, it is preferable to also reduce compounds containing chlorine atoms derived from Polymer (C) from the residual plastic. Examples of compounds containing chlorine atoms include acidic substances such as hydrogen chloride, chlorine gas, and chlorine-containing organic compounds. Note that chlorine gas is classified as an acidic substance in this specification because it dissolves in water to form hydrochloric acid. Furthermore, most chlorine-containing organic compounds are classified as acidic substances in this specification because they generate hydrogen chloride upon combustion. In this specification, the content of chlorine atoms derived from Polymer (C) may sometimes be referred to as the content of acidic substances derived from Polymer (C).
Each step is described in detail below.

### Step 1

Step 1 thermally decomposes a plastic comprising Polymer (C) and Polymer (E) at a temperature equal to or higher than the temperature at which thermal decomposition products are generated from Polymer (C). The plastic needs only comprise Polymer (C) and Polymer (E). Examples include plastic waste from household waste and industrial waste. The plastic may contain, within the spirit of the present disclosure, heterogeneous materials other than plastic, such as metals, concrete, wood, building materials, liquids such as water and organic solvents, dyes, coatings, and cellulose-type fibers.

Polymer (C) is a polymer having chlorine atoms. Polymer (E) is a polymer having ester bonds. An ester bond refers to the chemical bond represented by the structural formula R-COO-R' (where R and R' are each a monovalent organic group). Examples of Polymer (E) include polyesters having ester bonds in the main chain and polymers having ester bonds in side chains. Each Polymer (C) and Polymer (E) may independently be a single type or a combination of two or more types.

Thermal decomposition products from Polymer (C) include decomposition intermediates as well as decomposition products. Examples of thermal decomposition products from Polymer (C) include chlorine-containing thermal decomposition products. Specific examples of chlorine-containing thermal decomposition products include chlorine-containing gases such as hydrogen chloride gas and chlorine gas, and radical species generated by cleavage of C-Cl bonds on the polymer chain. Radical species derived from cleavage of C-C bonds or C-H bonds of Polymer (C) may also be generated from the radical species arising from C-Cl bond cleavage. The chemical species that promotes decomposition of Polymer (E) may be hydrogen ions (H⁺) generated by dissociation of hydrogen chloride gas from the thermal decomposition products or by cleavage of C-H bonds.

Since Polymer (C) has chlorine in its pendant groups or side chains, dechlorination or radical generation tends to occur at relatively low temperatures. These chlorine-containing thermal decomposition products promote decomposition of the ester bonds of Polymer (E) even at temperatures below those at which Polymer (E) alone would thermally decompose. In other words, even at temperatures at which Polymer (E) alone would not thermally decompose, decomposition of the ester bonds of Polymer (E) can be promoted by the thermal decomposition products of Polymer (C).

The thermal decomposition of this plastic can be carried out in a sealed or open container. An open container is preferred from the viewpoint of scale-up; a sealed container is preferred from the viewpoint of reliably recovering the chlorine-containing thermal decomposition products. The atmosphere within the sealed container may be an inert atmosphere such as nitrogen or argon or air. The process may be carried out under normal pressure, or under pressure, reduced pressure, or vacuum conditions.

The temperature at which thermal decomposition products are generated varies depending on the type of Polymer (C), pressure, and other conditions; however, heating to 200°C or above typically generates chlorine-containing thermal decomposition products. Since poly(vinyl chloride), a commodity plastic, generates chlorine-containing thermal decomposition products at 170-180°C, the lower limit of the thermal decomposition temperature is preferably 170°C. More preferably, the lower limit is 250°C, and still more preferably 300°C. Chlorine-free thermal decomposition products are also generated, mainly derived from the chlorine-containing thermal decomposition products, and are also considered to contribute to decomposition of Polymer (E).

The location of the ester bonds of Polymer (E) may be in the main chain backbone, a side chain, or a pendant group. From the viewpoint of more effectively bringing out the effects of the present disclosure, polyester resins having ester bonds in the main chain backbone are particularly suitable as Polymer (E). When Polymer (E) having ester bonds in the main chain backbone is used alone, it typically requires heating above 400°C before it decomposes. On the other hand, in the presence of chlorine-containing thermal decomposition products from Polymer (C), main chain scission of Polymer (E) can occur even below 400°C.

The upper limit of the thermal decomposition temperature may be set as appropriate depending on the components of the plastic and the equipment. From the viewpoint of efficiently recovering the plastic pyrolysis residue as a secondary-use substance, the upper limit is preferably 600°C, more preferably 500°C, and still more preferably 450°C.

The thermal decomposition time of this plastic can be set freely. Generally, the heating time at a temperature of 200-600°C is approximately 1 to 60 hours. Specific examples of the heating time include 2, 5, 10, 15, 20, 25, 30, 35, 40, 45, 50, and 55 hours. By setting the heating time to 1-60 hours, the decomposition of Polymer (C) in the plastic proceeds sufficiently, a sufficient quantity of chlorine-containing thermal decomposition products is generated, and the decomposition of the ester bonds of Polymer (E) can be promoted.

Specific examples of Polymer (C) include poly(vinyl chloride), poly(vinylidene chloride), chlorinated polyethylene, polychloroprene, and chlorinated natural rubber. Further examples include copolymers of vinyl chloride monomer with one or more monomers copolymerizable therewith, and chlorine-addition polymers in which chlorine is added to a polymer.

Monomers copolymerizable with vinyl chloride monomer include: vinyl esters such as vinyl acetate and vinyl propionate; acrylic esters such as methyl acrylate and butyl acrylate; methacrylic esters such as methyl methacrylate and ethyl methacrylate; fumaric esters such as butyl maleate and diethyl maleate; vinyl ethers such as vinyl methyl ether, vinyl butyl ether, and vinyl octyl ether; vinyl cyanides such as acrylonitrile and methacrylonitrile; α-olefins such as ethylene and propylene; styrenes and substituted derivatives thereof such as styrene, α-methylstyrene, vinyltoluene, t-butylstyrene, and chlorostyrene; vinylidene halides and vinyl halides other than vinyl chloride such as vinylidene chloride and vinyl bromide; and phthalic esters such as diallyl phthalate. From the viewpoint of efficient promotion of Polymer (E) decomposition, poly(vinyl chloride) is preferred as Polymer (C).

Specific examples of Polymer (E) include: polyethylene terephthalate (PET), in which the dicarboxylic acid component is terephthalic acid and the diol component is ethylene glycol; polyethylene naphthalate (PEN), in which the dicarboxylic acid component is 2,6-naphthalenedicarboxylic acid and the diol component is ethylene glycol; and polyethylene furanoate (PEF), in which the dicarboxylic acid component is 2,5-furandicarboxylic acid and the diol component is ethylene glycol. Further examples include polybutylene terephthalate and polyethylene succinate.

As additional dicarboxylic acid components, there may be used, for example: malonic acid, succinic acid, glutaric acid, adipic acid, suberic acid, sebacic acid, dodecanedioic acid, eicosanedioic acid, pimelic acid, azelaic acid, methylmalonic acid, ethylmalonic acid, adamantanedicarboxylic acid, norbornenedicarboxylic acid, cyclohexanedicarboxylic acid, decalindicarboxylic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-biphenyldicarboxylic acid, 4,4'-diphenyl ether dicarboxylic acid, 5-sodium sulfoisophthalic acid, phenylendan dicarboxylic acid, anthracenedicarboxylic acid, phenanthrenedicarboxylic acid, 9,9'-bis(4-carboxyphenyl)fluorene acid, and ester-forming derivatives thereof. Ester-forming derivatives include esterified dicarboxylic acids, dicarboxylic acid chlorides, and dicarboxylic acid anhydrides.

As additional diol components, there may be used, for example: 1,2-propanediol, 1,3-propanediol, butanediol, 2-methyl-1,3-propanediol, hexanediol, neopentyl glycol, cyclohexanedimethanol, cyclohexanediethanol, decahydronaphthalenedimethanol, decahydronaphthalenediethanol, norbornanedimethanol, norbornanediethanol, tricyclodecanedimethanol, tricyclodecaneethanol, tetracyclododecanedimethanol, tetracyclododecanediethanol, decalindimethanol, decalindiethanol, 5-methylol-5-ethyl-2-(1,1-dimethyl-2-hydroxyethyl)-1,3-dioxane, cyclohexanediol, bicyclohexyl-4,4'-diol, 2,2-bis(4-hydroxycyclohexylpropane), 2,2-bis(4-(2-hydroxyethoxy)cyclohexyl)propane, cyclopentanediol, 3-methyl-1,2-cyclopentanediol, 4-cyclopentene-1,3-diol, adamandiol, para-xylene glycol, bisphenol A, bisphenol S, styrene glycol, trimethylolpropane, pentaerythritol, and bis-β-hydroxyethyl terephthalate (BHET).

General-purpose resins used in everyday life from household waste are mostly polyethylene, polypropylene, polystyrene, poly(vinyl chloride), and polyester resins such as PET. Therefore, in plastics such as household waste, Polymer (C) is mostly poly(vinyl chloride), and Polymer (E) is mostly polyester resins such as PET. Olefin-based plastics such as polyethylene and polypropylene, and polystyrene, are the type whose main chains are cleaved by thermal decomposition, with an onset temperature of thermal decomposition typically around 400°C, which is higher than that of Polymer (C). Therefore, when thermal decomposition is performed at temperatures close to those at which Polymer (C) generates chlorine-containing thermal decomposition products, olefin-based plastics and polystyrene are essentially not thermally decomposed. For example, when the thermal decomposition temperature is set above 500°C, olefin-based plastics and polystyrene are also thermally decomposed, but since they do not substantially react with the chlorine-containing thermal decomposition products, low-molecular-weight olefin-based plastics whose main chains have been cleaved remain on the secondary-use substance side.

The plastic may contain, within the spirit of the present disclosure, plastics other than those described above, including, for example: polyurethane, polymethyl methacrylate, vinyl acetate resin, polycarbonate, ABS resin, polyphenol, polyamide, polyacetal, fluororesin, melamine resin, epoxy resin, polyimide, and polyvinyl alcohol. As described above, heterogeneous materials other than plastic may also be contained, within the spirit of the present disclosure.

During thermal decomposition, Polymer (E) and Polymer (C) do not need to be in contact with each other within the plastic. In other words, it is sufficient that the chlorine-containing thermal decomposition product dechlorinated from Polymer (C) can make contact with Polymer (E). For example, a case in which the container housing Polymer (E) and the container housing Polymer (C) are separate, and the chlorine-containing thermal decomposition products of Polymer (C) are supplied to Polymer (E) via a connecting pipe, can also be included within the scope of this plastic.

The plastic can undergo Step 1 in the state in which it was collected as waste, without pretreatment, which simplifies the process. On the other hand, from the viewpoint of improving the efficiency of the heat treatment step, it is preferable to perform a crushing step as pretreatment. By performing crushing, the surface area of the plastic is greatly increased, and the rate of decomposition of Polymer (E) by chlorine-containing thermal decomposition products generated from Polymer (C) can be significantly increased. From a cost perspective, relatively large particle sizes such as granular form are preferred for the crushing step; from the viewpoint of reducing heat treatment time, powder size is preferred. Furthermore, when the heating temperature in Step 1 is equal to or higher than the melting temperature of Polymer (E), the stirring and kneading efficiency can be significantly improved by performing crushing as a pretreatment, and as a result, a significant reduction in heat treatment time can be expected.

Before Step 1, a step of sorting heterogeneous materials from the plastic before crushing may be provided. For example, magnetically susceptible materials may be recovered by magnetic force, or concrete and similar materials may be recovered by density. After crushing, centrifugal separation may also be performed to remove heterogeneous materials by density.

This plastic may contain catalysts or initiators used during synthesis of the plastic material, or additives for imparting specific functions to the plastic material (e.g., flame retardants, antistatic agents, plasticizers, UV stabilizers, fillers), such as metal particles, metal oxide particles, and ceramic particles. These may be removed in advance by magnetic force or density, may be removed at the pyrolysis residue stage, or may be used as is in solid fuel without removal.

From the viewpoint of effectively promoting decomposition of Polymer (E), the mass ratio of Polymer (E) to Polymer (C) in this plastic is preferably 1:8 to 8:1. Specific examples of such mass ratios include 1:1, 2:1, 3:1, 4:1, 5:1, 6:1, and 7:1. From the viewpoint of efficiently utilizing the chlorine-containing thermal decomposition products for the decomposition reaction of the ester bonds of Polymer (E) while avoiding an excess of such products, when poly(vinyl chloride) is selected as Polymer (E) and polyethylene terephthalate as Polymer (C), a mass ratio of 3:1 to 2:1 is preferred. For other combinations, a molar ratio of 1:1 to 1:2 for the carboxylic acid-derived structural units in the dicarboxylic acid component constituting Polymer (E) to the chlorine atoms constituting Polymer (C) is preferred. Polymer (C) preferably mainly comprises poly(vinyl chloride), and Polymer (E) preferably mainly comprises PET. Here, "mainly comprises" refers to the most abundant component among the components of each of Polymer (C) and (E), respectively. The main component is preferably 40 mass% or more, more preferably 60 mass% or more, and still more preferably 80 mass% or more.

The plastic may be sampled to monitor the chlorine concentration and ester bond concentration therein, and deficient components may be supplemented using off-cuts from a factory production line, or similar materials.

### Step 2

Step 2 is a step of decomposing Polymer (E) using the thermal decomposition products generated from Polymer (C) by thermal decomposition, and separating acidic substances (carboxylic acid compounds and their derivatives) comprising structures derived from Polymer (E) from the plastic from Step 1. Derivatives of carboxylic acid compounds include, for example, chlorine-containing carboxylic acid compound derivatives comprising a carboxylic acid component obtained by decomposing the ester bonds of Polymer (E).

FIG. 2 shows a schematic diagram for explaining one example of a plastic processing apparatus used in this plastic recycling method. As shown in the figure, plastic processing apparatus 101 has a pyrolysis furnace 1, a plastic supply port 2, and a trap unit 3 for sublimated substances. The pyrolysis furnace 1 and the trap unit 3 are connected by pipes 4, 5, and 8. Gas is drawn in the direction of the arrows in the figure by a gas suction device (not shown).

Above the pyrolysis furnace 1, there is a plastic supply port 2 that can be freely opened and closed, and crushed plastic, for example, is supplied through the plastic supply port 2 at an appropriate timing according to instructions from a control unit (not shown).

The pyrolysis furnace 1 is heated to a temperature equal to or higher than the temperature at which thermal decomposition products are generated from Polymer (C). The heating softens the plastic and may even melt it. The heating promotes decomposition of Polymer (E) in the pyrolysis furnace 1. Specifically, thermal decomposition products are generated from Polymer (C), which promotes decomposition of the ester bonds of Polymer (E), generating carboxylic acid compounds and their derivatives as acidic substances comprising structures derived from Polymer (E). It is preferable that the ester bonds of Polymer (E) be decomposed into carboxylic acid compounds or their derivatives and an alcohol or its derivatives. The alcohol or its derivatives may be recovered by means such as solvent extraction or sublimation. This makes it possible to recycle the raw materials for Polymer (E). According to the plastic recycling method of the present disclosure, since acidic substances derived from Polymer (E) can be efficiently removed, it is also advantageous in avoiding equipment degradation.

Pipe 4 is preferably thermally insulated to prevent deposition of sublimated substances, while pipe 5 preferably has a structure capable of cooling. A specific example of a cooling structure involves providing a flow channel for a cooling medium inside or outside pipe 5. Any gas such as air or any liquid such as water can be used as the cooling medium. The temperature of the cooling medium need only be a temperature at which the sublimated substances solidify; for example, room temperature.

According to this method, by heating to a temperature equal to or higher than the temperature at which Polymer (C) generates chlorine-containing thermal decomposition products, decomposition of Polymer (E) can be promoted even below the decomposition temperature of Polymer (E) alone, and raw materials derived from Polymer (E) can be recovered and recycled through decomposition of the ester bonds of Polymer (E), providing an excellent effect.

When PET is used as Polymer (E), decomposition of the ester bonds of Polymer (E) yields terephthalic acid, MCET, and BCET as acidic substances. When PEN is used as Polymer (E), naphthalenedicarboxylic acid, mono(2-chloroethyl) 2,6-naphthalenedicarboxylate, and bis(2-chloroethyl) 2,6-naphthalenedicarboxylate are obtained. When polybutylene terephthalate is used as Polymer (E), terephthalic acid and bis(4-chlorobutyl) terephthalate are obtained. When polypropylene terephthalate is used as Polymer (E), terephthalic acid and bis(3-chloropropyl) terephthalate are obtained.

Examples of methods for recovering the acidic substances generated in Step 2 include recovery as sublimated substances and separation by dissolution in a solvent. When the acidic substance can be recovered as a sublimated substance at the thermal decomposition temperature, a method of gasifying and separating it and then separating it as a solid is simple. FIG. 2 shows an example of recovery as sublimated substances. Carboxylic acid compounds and their derivatives that have become gas as sublimated substances pass through pipes 4 and 5, are cooled in cooling section 9, and are recovered as solids from sublimated substances in trap unit 3. The cooling temperature in trap unit 3 is arbitrary, but can be set to, for example, 20-150°C. On the other hand, since hydrogen chloride gas and chlorine gas, which are chlorine-containing thermal decomposition products, remain as gas even upon cooling, they return to the pyrolysis furnace 1 and are used to promote decomposition of Polymer (E).

For plastic, if Polymer (C) is insufficient relative to Polymer (E), carboxylic acid compounds and their derivatives comprising structures derived from Polymer (E) will not be sufficiently reduced. Before supplying the plastic, the quantitative ratio of Polymer (E) to Polymer (C) in the plastic may be sampled, and the deficient component may be added as necessary to ensure sufficient reduction of carboxylic acid compounds and their derivatives comprising structures derived from Polymer (E). Alternatively, a supply port (not shown) for chlorine-containing thermal decomposition products may be provided in the pyrolysis furnace 1, and the required amount of chlorine-containing thermal decomposition products may be supplied.

FIG. 3 shows a schematic diagram for explaining another example of a plastic processing apparatus used in this plastic recycling method according to a modified example. As shown in the figure, plastic processing apparatus 102 has a heating zone 11 and plastic supply port 2 on the left side of the horizontal processing furnace 10 in the figure, and a cooling zone 12, pyrolysis residue outlet 13, and exhaust port 14 on the right side. Acidic substances can be recovered in cooling zone 12. The apparatus may be inclined as necessary to prevent molten raw plastic from reaching the cooling zone 12 unreacted.

Recovering sublimated gas from the heating zone of the plastic processing apparatus from the top of the apparatus is advantageous in terms of apparatus miniaturization. However, if the cooling zone for recovering acidic substances is placed above the heating zone, there is a risk that the acidic substances recovered in the trap section may fall by gravity into the heating zone or may clog filters and the like provided between the heating zone and the cooling zone. According to the plastic processing apparatus of this modified example, since the cooling zone, which is the trap section for acidic substances, and the heating zone, in which thermal decomposition is performed, are arranged horizontally, the acidic substances thermally decomposed in the heating zone can be efficiently separated, effectively preventing the acidic substances from being mixed back into the pyrolysis residue and preventing clogging of filters installed between the heating zone and the cooling zone.

### Step 3

Step 3 is a step of confirming that the acidic substances (carboxylic acid compounds and their derivatives) derived from Polymer (E) in the plastic have been sufficiently reduced. The reduction rate from the plastic may be set as appropriate depending on the intended use and purpose. For example, a sample may be taken from the plastic to confirm the reduction rate of acidic substances.

Secondary-use substances are, for example, solid fuel and oil/fat feedstock. The reduction rate of acidic substances in the plastic to be extracted as a secondary-use substance is preferably 40 mol% or more. According to the plastic recycling method of the present disclosure, since acidic substances derived from Polymer (E) can be reduced from the plastic, the problems of corroding equipment during thermal recycling (use as solid fuel) and releasing acidic substances derived from Polymer (E) into the atmosphere can be effectively addressed.

When Polymer (E) is a polyester resin, the ester bonds are decomposed to yield an alcohol and a carboxylic acid or its derivatives. In this case, the carboxylic acid or its derivatives become acidic substances. Therefore, when Polymer (E) is a polyester resin, it is desirable that the ester bonds be decomposed, and that the acidic substances (carboxylic acids or their derivatives) not remain in the plastic pyrolysis residue. That is, it is preferable that the acidic substances (carboxylic acids or their derivatives) do not remain in the plastic pyrolysis residue, and it is preferable that no ester bonds remain in Polymer (E). The reduction rate of acidic substances derived from Polymer (E) can be determined, for example, by the method described in the Examples below. The reduction rate of acidic substances is preferably 40 mol% or more, more preferably 80 mol% or more, still preferably 90 mol% or more, and particularly preferably 99 mol% or more.

### Step 3-2 (Optional)

As an optional step, a step of confirming that the chlorine content in the plastic has been sufficiently reduced may be included (hereinafter referred to as Step 3-2). This can be confirmed by sampling from the plastic and measuring the chlorine content. Alternatively, a sensor housed in the pyrolysis furnace 1 may measure the chlorine content of the plastic in the pyrolysis furnace 1 at an appropriate timing.

The reduction rate of chlorine from Polymer (C) can be determined, for example, as described in the Examples below. The reduction rate of chlorine is preferably 30 mol% or more, more preferably 45 mol% or more, still preferably 85 mol% or more, and particularly preferably 99 mol% or more.

According to the plastic recycling method of the present disclosure, in addition to acidic substances derived from Polymer (E), acidic substances derived from Polymer (C) (chlorine atomcontaining compounds) can also be reduced from the plastic, providing the excellent effect of being able to greatly reduce both. As a result, excellent secondary-use substances can be obtained. For example, the problems of corroding equipment during thermal recycling (used as solid fuel) and releasing acidic substances derived from Polymer (E) and Polymer (C) into the atmosphere can be effectively addressed.

### Step 4

Step 4 is a step of extracting the plastic as a secondary-use substance. Secondary-use substances include solid fuel, oil/fat feedstock, and liquefied fuel. The secondary-use substance mainly comprises carbon (char) and/or hydrocarbon compounds. Here, "mainly comprises" refers to the component with the greatest mass in the secondary-use substance. When both carbon and hydrocarbon compounds are contained, it is sufficient that their combined mass represents the greatest proportion.

Acidic substances such as carboxylic acid compounds and their derivatives cause problems such as equipment corrosion and pipe clogging. Furthermore, the residue generated during chemical recycling mainly comprises hydrocarbons, but if acidic substances such as carboxylic acid compounds and their derivatives are contained in this residue, acidic gases are generated during combustion, necessitating equipment corrosion countermeasures and exhaust gas treatment. Similar issues may also arise in thermal recycling by direct combustion of plastics. To address this problem, a method involving the addition of slaked lime to plastic feedstock has been proposed (Journal of the Japan Society of Material Cycles and Waste Management, Vol. 22, No. 3, pp. 178-189, 2011, "Development of dechlorination technology for oil recovery recycling of used plastic packaging," Eiichi Ono et al.). However, use of slaked lime leaves calcium residue in the residue, which, during reuse of the residue, particularly for fuel, leads to serious problems such as an increase in ash requiring industrial waste disposal and calcium adhesion to the furnace body.

According to this method, Polymer (E) can be thermally decomposed at a low temperature. The carboxylic acid compounds and their derivatives generated from the ester bonds of Polymer (E) can thereby be obtained. As a result, acidic substances (carboxylic acid compounds and their derivatives derived from Polymer (E), and chlorine-containing compounds derived from Polymer (C)) can be efficiently removed from the residual plastic at a temperature lower than the thermal decomposition temperature of Polymer (E).

According to this plastic recycling method, since acidic substances derived from Polymer (E) can be removed from multiple plastics that are difficult to sort into single plastic materials, suitable secondary-use substances can be obtained as solid fuel for thermal recycling or as feedstock for chemical recycling by oil recovery. This is therefore suitable for solid fuel and oil recovery feedstock, the importance of which has been increasing in recent years given the tightening of energy supply and rising prices of resource fuels.

Furthermore, according to this method, carboxylic acid compounds and their derivatives comprising structures derived from Polymer (E), and compounds derived therefrom, can be easily separated from the pyrolysis residue by methods such as sublimation. These carboxylic acid compounds and their derivatives, or compounds derived therefrom (e.g., sublimated substances, purified sublimated substances, or sublimated substances subjected to certain treatments) can be used, for example, as monocarboxylic acids or polycarboxylic acids with two or more carboxyl groups as monomers for polyester resins to perform re-polymerization of polyester resins. Furthermore, the aforementioned compounds can also be used as monomers for resins other than polyester resins, or as various additives such as plasticizers and flame retardants, or as reaction reagents.

The present disclosure further provides a method for greatly reducing the content of acidic substances in a pyrolysis residue expected to be reusable as oil/fat feedstock or otherwise, by heating Polymer (C) and Polymer (E), and separating acidic substances derived from Polymer (C) and Polymer (E) while suppressing the generation of chlorine-containing gas. The mixing ratio of Polymer (C) and Polymer (E) is preferably the ratio described above. Since the content of acidic substances can be greatly reduced, this is also suitable for solid fuel and liquid fuel.

The above constitutes Embodiment A.

### [Method for Producing a Depolymerization Product Containing a Carboxylic Acid or a Derivative Thereof from a Resin Mixture Containing Polymer E]

The production method according to the present embodiment for producing a depolymerization product containing a carboxylic acid or a derivative thereof from a resin containing a polymer having ester bonds (Polymer E) comprises: causing a depolymerization agent for Polymer E to act on the resin to generate the depolymerization product in a gaseous state; and separating the depolymerization product from the depolymerization reaction system to condense or sublimate it.

"Polymer E," "depolymerization product containing a carboxylic acid or a derivative thereof," "depolymerization agent for Polymer E," and "causing the depolymerization agent for Polymer E to act on the resin mixture" in this production method may be the same as those in the above [Method for Producing Residue for recycling].

The resin containing Polymer E may be a resin containing only Polymer E as its resin component (a single resin), or a resin containing Polymer E and a resin other than Polymer E as its resin components (a resin mixture). This resin mixture may be the same as the "resin mixture containing Polymer E" in the above [Method for Producing Residue for recycling].

That is, for example, the resin may contain Polymer C and the depolymerization agent may be one generated by thermal decomposition of Polymer C; the depolymerization agent may be at least one selected from the group consisting of hydrogen chloride and chlorine; Polymer E may be a polyester; and the depolymerization agent for Polymer E may be caused to act on the resin in a heated state (e.g., 600°C or below).

The single resin containing Polymer E may contain one or two or more types of Polymer E. The single resin containing Polymer E may be a resin consisting of Polymer E alone, or may be a resin containing, in addition to Polymer E, "other components" as described in the above [Method for Producing Residue for recycling]. When the single resin containing Polymer E contains such other components, the total content of such other components, based on the total mass of the resin, may be 10 mass% or less, 5 mass% or less, 1 mass% or less, or 0.1 mass% or less.

Separating the depolymerization product in a gaseous state from the depolymerization reaction system may be carried out, for example, by causing the depolymerization agent to act on the resin in a first container housing the resin containing Polymer E, and guiding the depolymerization product in a gaseous state into a second container (Embodiment 1). In another embodiment, for example, the depolymerization agent may be caused to act on the resin in a first container housing the resin containing Polymer E, and the depolymerization product in a gaseous state may be guided to a region in the first container that is separated by a certain distance in the horizontal direction from the polymerization reaction system.

In Embodiment 1, the depolymerization reaction may be advanced by supplying the depolymerization agent to the first container from outside the first container. Furthermore, when the resin containing Polymer E contains Polymer C, Polymer C may be thermally decomposed by externally heating the first container, and the depolymerization reaction may be advanced by the depolymerization agent such as hydrogen chloride generated thereby. In this case, the depolymerization agent may or may not be supplied from outside the first container.

Guiding the depolymerization product in a gaseous state into the second container may be accomplished by transporting gas from the first container to the second container by means of a pump or the like. For example, the first container and the second container may be connected by a first communication pipe, in which case gas may be transported from the first container through the first communication pipe to the second container by means of a pump or the like, thereby guiding the depolymerization product in a gaseous state in the first container into the second container.

When guiding the depolymerization product in a gaseous state into the second container, it is preferable to maintain a sufficiently high temperature to keep it in a gaseous state. Such a temperature can be set as appropriate depending on the type of depolymerization product. For example, when the resin containing Polymer E contains PET (i.e., when the depolymerization product contains TPA, BCET, and MCET), it is preferable to maintain the depolymerization product at 180°C or above, or 350°C or above. Methods for maintaining the depolymerization product in a gaseous state at a sufficiently high temperature include, for example, sufficiently raising the temperature of the first container and, when used, the first communication pipe.

In Embodiment 1, the depolymerization agent may be guided together with the depolymerization product into the second container, and at least a portion of the depolymerization agent guided into the second container may be guided in a gaseous state back into the first container. For example, the first container and the second container may each be connected by a first communication pipe and a second communication pipe (Embodiment 1-1), and the depolymerization product and depolymerization agent in a gaseous state may be guided from the first container through the first communication pipe into the second container, and then the depolymerization agent in a gaseous state may be guided from the second container through the second communication pipe back into the first container. This makes it possible to reduce the amount of depolymerization agent supplied to the first container from outside.

Condensing or sublimating the depolymerization product may be accomplished by cooling the depolymerization product or by pressurizing it. Cooling the depolymerization product means lowering its temperature (e.g., lowering it by 0.1°C or more, 1°C or more, 5°C or more, 10°C or more, 25°C or more, 50°C or more, 100°C or more, 200°C or more, or 300°C or more). For example, in Embodiment 1-1, if the temperature of the second container is lower than that of the first communication pipe, the depolymerization product can be cooled by guiding it from the first communication pipe into the second container. For example, when the temperature of the first communication pipe is 180-350°C, cooling the second container to -100 to 180°C allows the depolymerization product to be cooled by guiding it from the first communication pipe into the second container. When guiding the depolymerization product into a container such as the second container, the depolymerization product may be cooled by cooling that container.

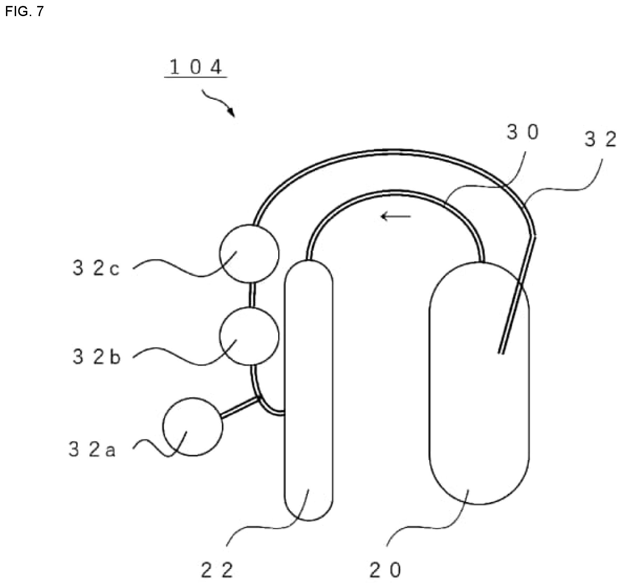

### Apparatus Example 4 (Fig. 7) - Embodiment 1-1

Next, one example of Embodiment 1-1 is described below with reference to FIG. 7. The production method described below is merely one aspect of the present embodiment, and the present embodiment is naturally not limited to the content below.

FIG. 7 shows an apparatus for carrying out the production method for producing a depolymerization product containing a carboxylic acid or a derivative thereof from a resin containing Polymer E. Apparatus 104 shown in FIG. 7 comprises: a first container 20, a second container 22, and a first communication pipe 30 and a second communication pipe 32 each connecting the first container 20 and the second container 22.

The second communication pipe 32 is equipped with a pressure gauge 32a, a circulation pump 32b, and a flow meter 32c. The pressure gauge 32a can evaluate the reaction rate of the depolymerization reaction by measuring the consumption rate of the depolymerization agent in apparatus 104. The circulation pump 32b can circulate the gas in apparatus 104. Specifically, the gas in apparatus 104 can be circulated in the order: first container 20 → first communication pipe 30 → second container 22 → second communication pipe 32 → first container 20. The flow meter 32c can measure the flow velocity of the gas flow in apparatus 104 created by the circulation pump 32b. Note that the pressure gauge 32a and flow meter 32c may be omitted from apparatus 104.

By housing the resin containing Polymer E in the first container and supplying a depolymerization agent thereto, the depolymerization agent can be caused to act on the resin, thereby generating a depolymerization product. At this time, by externally heating the first container, the depolymerization reaction can be promoted, and the depolymerization product can be maintained in a gaseous state.

The depolymerization product in a gaseous state that is generated is guided through the first communication pipe 30 into the second container 22 by the gas flow created by the circulation pump 32b. At this time, to maintain the depolymerization product in a gaseous state, the first communication pipe 30 may be externally heated, the circulation flow rate may be increased, or similar measures may be taken.

The depolymerization product in a gaseous state guided into the second container 22 can be cooled in the second container 22, for example by cooling the second container 22 or similar measures. Upon cooling, the depolymerization product condenses or sublimated to become a liquid or solid and accumulates in the second container 22. The accumulated depolymerization product can thus be recovered.

Here, by maintaining the second container 22 or the second communication pipe 32 at or below a certain temperature (e.g., room temperature), the depolymerization product in a gaseous state guided into the second container 22 can be separated from the depolymerization reaction system. That is, the depolymerization product cannot pass through the first communication pipe 30 by the gas flow created by the circulation pump 32b and return to the first container 20; and since the depolymerization product condenses or sublimated in the second container 22 or the second communication pipe 30, it also cannot pass through the second communication pipe 30 and return to the first container 20.

Furthermore, the depolymerization agent can be guided together with the depolymerization product into the second container 22, and at least a portion of the depolymerization agent guided into the second container 22 can be guided in a gaseous state back into the first container 20. Such movement of the depolymerization agent can be accomplished by the gas flow created by the circulation pump 32b. By having at least, a portion of the depolymerization agent guided into the second container 22 be guided in a gaseous state into the first container 20, the reduction in the amount of depolymerization agent in the first container 20 can be suppressed.

### [Method 1 for Producing TPA Crystals]

Method 1 for producing terephthalic acid crystals according to the present embodiment comprises: causing hydrogen chloride to act on a resin containing a reaction product of a diol and terephthalic acid, thereby generating a depolymerization product comprising terephthalic acid and an ester of a chloroalcohol in which one hydroxyl group of terephthalic acid and the diol is replaced by a chlorine atom; hydrolyzing the ester in the depolymerization product to increase the content of terephthalic acid in the depolymerization product; and crystallizing the terephthalic acid during and/or after the hydrolysis.

The resin containing a reaction product of a diol and terephthalic acid may be a resin containing only the reaction product as its resin component (a single resin), or a resin containing the reaction product and a resin other than the reaction product as its resin components (a resin mixture). This resin mixture may be the same as the "resin mixture containing Polymer E" in the above [Method for Producing Residue for recycling], in which Polymer E is the reaction product of a diol and terephthalic acid.

The single resin containing the reaction product of a diol and terephthalic acid may contain one or two or more types of such reaction products. This single resin may consist of the reaction product alone, or may contain, in addition to the reaction product, "other components" as described in the [Method for Producing Residue for recycling]. When such other components are contained, the total content thereof, based on the total mass of the resin, may be 10 mass% or less, 5 mass% or less, 1 mass% or less, or 0.1 mass% or less.

The reaction product of a diol and terephthalic acid may be at least one selected from the group consisting of PET, polybutylene terephthalate, and polytrimethylene terephthalate, and is preferably PET.

By causing hydrogen chloride to act on a resin containing a reaction product of a diol and terephthalic acid, the reaction product is depolymerized, generating at least terephthalic acid and an ester of a chloroalcohol in which one hydroxyl group of terephthalic acid and the diol is replaced by a chlorine atom. When the reaction product is PET, the ester comprises MCET and BCET. When the reaction product is polybutylene terephthalate, the ester comprises bis(4-chlorobutyl) terephthalate. When the reaction product is polytrimethylene terephthalate, the ester comprises bis(3-chloropropyl) terephthalate.

Hydrolysis of the depolymerization product may be carried out, for example, in a solvent containing water. Solvents containing water include water or an aprotic polar solvent containing water. The aprotic polar solvent is preferably at least one selected from the group consisting of 1,3-dimethyl-2-imidazolidinone (DMI), N-methyl-2-pyrrolidone (NMP), and N,N-dimethylacetamide (DMAc), and is more preferably at least one selected from the group consisting of DMI and NMP from the viewpoints of improving the purity of TPA in the crystals and improving the yield of TPA. DMI is still more preferable from the viewpoints of further improving the purity of TPA in the crystals, further improving the yield of TPA, increasing WI, and reducing YI. Water is preferably distilled water.

The hydrolysis may be performed under heated conditions. For example, when hydrolysis of the depolymerization product is performed in water, heating may be carried out at 170-250°C or 190-230°C, for 2 to 8 hours or 3 to 5 hours. Although the depolymerization product typically has low solubility in water, it can be sufficiently dissolved in water under high-temperature, high-pressure conditions. When hydrolysis is performed in water, heating may also be carried out at 100-160°C or 120-140°C for 18 to 30 hours or 20 to 26 hours.

To promote hydrolysis, an appropriate base may be added to the water serving as the solvent containing water. An example of the base is sodium hydroxide. When a base is added to water, hydrolysis can proceed under heating conditions of, for example, 100°C or below. Depending on the amount and type of base added, the hydrolysis product may become a water-soluble terephthalate salt and remain dissolved without precipitating. In this case, terephthalic acid can be liberated and recovered as crystals by adding an appropriate acid.

Crystal formation is typically observed during the hydrolysis. Further crystal formation occurs upon cooling after the hydrolysis is complete.

During or after the hydrolysis, the crystals or solid TPA may be adsorbed onto activated carbon. For example, activated carbon may be added to and mixed with the system in which hydrolysis is proceeding or has proceeded, thereby adsorbing the crystals or solid TPA onto the activated carbon. The activated carbon may be in crushed form. The activated carbon may have a particle size of 0.05 to 3 mm or 0.2 to 1 mm.

The obtained crystals may be subjected to washing, drying, and the like. Methanol may be used for washing. Drying may be carried out at 60-80°C overnight by vacuum desiccation.

The obtained TPA crystals can be used as a raw material for PET. PET can be produced from TPA crystals by a conventional method, but it is preferable to produce PET by subjecting it to a melt polymerization method followed by a solid-state polymerization method. PET produced in this manner can have a number-average molecular weight, crystallization temperature, and melting point comparable to those of the PET of "I LOHAS" (registered trademark) Natural Water (manufactured by The Coca-Cola Company) PET bottles.

### [Method for Producing BHET Crystals]

The production method for bis(2-hydroxyethyl) terephthalate crystals according to the present embodiment comprises: forming bis(2-hydroxyethyl) terephthalate (BHET) and crystallizing it by esterification or transesterification of a depolymerization product, the depolymerization product comprising terephthalic acid and an ester of a chloroalcohol in which one hydroxyl group of the diol is replaced by a chlorine atom, the depolymerization product being generated by causing hydrogen chloride to act on a resin containing a reaction product of a diol and terephthalic acid.

The resin containing a reaction product of a diol and terephthalic acid may be the same as that in the above [Method 1 for Producing TPA Crystals]. The reaction product of a diol and terephthalic acid, and the ester of a chloroalcohol in which one hydroxyl group of the diol is replaced by a chlorine atom, may naturally be the same as those in the above [Method 1 for Producing TPA Crystals].

Esterification or transesterification of the depolymerization product can be carried out, for example, using ethylene glycol. By ethylene glycol, TPA is esterified to form BHET, MCET is esterified and transesterified to form BHET, and BCET is transesterified to form BHET. Esterification or transesterification using ethylene glycol may be carried out at 80-120°C or 90-110°C, for 10 to 30 hours or 20 to 28 hours. For example, by performing esterification or transesterification at 90-110°C for 20 to 28 hours, the molar fraction of BHET in the total amount of substance of TPA, MCET, BCET, and BHET after the reaction can be 90% or more, 95% or more, or 97% or more.

Esterification or transesterification of the depolymerization product may also be carried out in ethylene glycol. This allows the esterification or transesterification to proceed efficiently. The depolymerization product typically exhibits sufficient solubility in ethylene glycol.

### [Method for Producing Recycling Feedstock Containing BCET, MCET, or TPA]

The production method for a recycling feedstock containing BCET according to the present embodiment comprises: applying a depolymerization product, which is generated by causing hydrogen chloride to act on a resin containing polyethylene terephthalate and which comprises TPA, MCET, and BCET, with a solvent (first solvent); removing insolubles comprising TPA and MCET; and obtaining BCET dissolved in the solvent (first solvent). The solubilities of TPA, MCET, and BCET in the solvent (first solvent) are ≤1 mass%, ≤3 mass%, and ≥3 mass%, respectively.

The production method for a recycling feedstock containing MCET according to the present embodiment comprises: applying a depolymerization product comprising TPA, MCET, and BCET, generated by causing hydrogen chloride to act on a resin containing polyethylene terephthalate, with a first solvent; separating BCET dissolved in the first solvent from insolubles in the first solvent comprising TPA and MCET; applying the insolubles with a second solvent; removing insolubles in the second solvent comprising TPA; and obtaining MCET dissolved in the second solvent. The solubilities of TPA, MCET, and BCET in the first solvent are ≤1 mass%, ≤3 mass%, and ≥3 mass%, respectively. The solubilities of TPA and MCET in the second solvent are ≤1 mass% and ≥1 mass%, respectively.

The production method for a recycling feedstock containing TPA according to the present embodiment comprises: applying a depolymerization product comprising TPA, MCET, and BCET, generated by causing hydrogen chloride to act on a resin containing polyethylene terephthalate, with a first solvent; separating BCET dissolved in the first solvent from insolubles in the first solvent comprising TPA and MCET; applying the insolubles with a second solvent; and obtaining ethyl acetate-insoluble material comprising TPA. The solubilities of TPA, MCET, and BCET in the first solvent are 51 mass%, ≤3 mass%, and ≥3 mass%, respectively. The solubilities of TPA and MCET in the second solvent are ≤1 mass% and ≥1 mass%, respectively.

In this specification, solubility refers to the solubility (mass%) determined at a solvent temperature of 25°C by the method described in "Method for Solubility Measurement (G2-6-190)" (https://www.pmda.go.jp/files/000270159.pdf, accessed December 24, 2024).

The production method for recycling feedstock containing BCET, the production method for recycling feedstock containing MCET, and the production method for recycling feedstock containing TPA according to the present embodiment can also be viewed as a series of operations constituting a solvent separation of the depolymerization product using toluene and ethyl acetate.

The resin containing PET in these three production methods may be the same as the resin containing the reaction product of a diol and terephthalic acid in the above [Method 1 for Producing TPA Crystals], in which the reaction product is PET.

The first solvent in these three production methods is not particularly limited as long as its solubility falls within the ranges described above and may be at least one solvent selected from the group consisting of aromatic hydrocarbon solvents, aliphatic hydrocarbon solvents, and ether solvents. Examples of aromatic hydrocarbon solvents include toluene, benzene, xylene, mesitylene, and tetralin. Examples of aliphatic hydrocarbon solvents include pentane, hexane, cyclohexane, and petroleum ether. Examples of ether solvents include diethyl ether, diisopropyl ether, and methyl t-butyl ether. Aromatic hydrocarbon solvents are preferred as the first solvent, and toluene is more preferred.

The solubility of terephthalic acid in the first solvent is ≤1 mass%, i.e., the upper limit is 1 mass%, but this upper limit may be 0.9 mass%, 0.7 mass%, or 0.5 mass%. The lower limit of solubility may be 0.01 mass%, 0.1 mass%, or 0.2 mass%. These upper and lower limits can be freely combined.

The solubility of MCET in the first solvent is ≤3 mass%, i.e., the upper limit is 3 mass%, but this upper limit may be 2.5 mass%, 2 mass%, 1.5 mass%, or 1 mass%. The lower limit of solubility may be 0.01 mass%, 0.1 mass%, or 0.2 mass%. These upper and lower limits can be freely combined.

The solubility of BCET in the first solvent is ≥3 mass%, i.e., the lower limit is 3 mass%, but this lower limit may be 3.5 mass%, 4 mass%, 4.5 mass%, or 5 mass%. The upper limit of solubility may be 20 mass%, 15 mass%, or 10 mass%. These upper and lower limits can be freely combined.

The second solvent is not particularly limited as long as its solubility falls within the ranges described above and may be at least one solvent selected from the group consisting of ether solvents, ketone solvents, ester solvents, and alcohol solvents. Examples of ether solvents include tetrahydrofuran, 1,4-dioxane, and 1,2-dimethoxyethane. Examples of ketone solvents include acetone, methyl ethyl ketone, and methyl isobutyl ketone. Examples of ester solvents include ethyl acetate, methyl acetate, isopropyl acetate, n-butyl acetate, and methyl propionate. Examples of alcohol solvents include methanol, ethanol, and 2-propanol. Ester solvents are preferred as the second solvent, and ethyl acetate is more preferred.

The solubility of TPA in the second solvent is ≤1 mass%, i.e., the upper limit is 1 mass%, but this upper limit may be 0.9 mass%, 0.7 mass%, or 0.5 mass%. The lower limit of solubility may be 0.01 mass%, 0.1 mass%, or 0.2 mass%. These upper and lower limits can be freely combined.

The solubility of MCET in the second solvent is ≥1 mass%, i.e., the lower limit is 1 mass%, but this lower limit may be 1.2 mass%, 1.5 mass%, 2 mass%, or 3 mass%. The upper limit of solubility may be 20 mass%, 15 mass%, or 10 mass%. These upper and lower limits can be freely combined.

Applying the depolymerization product with the first solvent may be accomplished by adding the depolymerization product to the first solvent. The first solvent may then be stirred. By such operations, BCET dissolved in the first solvent and insolubles in the first solvent comprising TPA and MCET can be efficiently separated.

Applying the insolubles in the first solvent with the second solvent may be accomplished by adding the insolubles to the second solvent. The second solvent may then be stirred. By such operations, MCET dissolved in the second solvent and insolubles in the second solvent comprising TPA can be efficiently separated.

The recycling feedstock containing BCET, MCET, or TPA can be used as a raw material for resins, and the like. Crystals of BCET, MCET, or TPA can also be obtained from a recycling feedstock containing BCET, MCET, or TPA. For example, BCET can be crystallized by cooling in a mixed solvent of ethanol:hexane = 15:85 (volume ratio). MCET can be crystallized by cooling in a mixed solvent of ethyl acetate:ethanol = 60:10 (volume ratio).

### [Method 2 for Producing TPA Crystals]

Method 2 for producing terephthalic acid crystals according to the present embodiment comprises: applying a depolymerization product, which is generated by causing hydrogen chloride to act on a resin containing polyethylene terephthalate and which comprises TPA, MCET, and BCET, with a solvent (first solvent); removing insolubles comprising TPA and MCET; obtaining BCET dissolved in the solvent (first solvent); hydrolyzing the obtained BCET; and forming and crystallizing terephthalic acid. The solubilities of TPA, MCET, and BCET in the first solvent are 51 mass%, ≤3 mass%, and ≥3 mass%, respectively.

The first solvent may be the same as that in the above [Method for Producing Recycling Feedstock Containing BCET, MCET, or TPA]. The resin containing PET may be the same as the resin containing the reaction product of a diol and terephthalic acid in [Method 1 for Producing TPA Crystals], in which the reaction product is PET.

The hydrolysis may be performed, for example, under alkaline conditions with heating. For example, sodium hydroxide may be added to a solvent such as toluene containing BCET, and the mixture may be stirred at 60-90°C for 20 to 28 hours to advance the hydrolysis. After hydrolysis, terephthalic acid dissolves as the anion (terephthalate) in the sodium hydroxide aqueous solution. Terephthalic acid can be recovered by neutralizing this solution with an appropriate acid. The obtained powder may be subjected to washing, drying, and the like.

### [Method 3 for Producing TPA Crystals]

Method 3 for producing terephthalic acid crystals according to the present embodiment comprises: applying a depolymerization product, which is generated by causing hydrogen chloride to act on a resin containing polyethylene terephthalate and which comprises TPA, MCET, and BCET, with a solvent (first solvent); separating BCET dissolved in the solvent (first solvent) from insolubles in the solvent (first solvent) comprising TPA and MCET; hydrolyzing the insolubles to increase the content of terephthalic acid therein; and crystallizing the terephthalic acid during and/or after the hydrolysis. The solubilities of TPA, MCET, and BCET in the first solvent are 51 mass%, ≤3 mass%, and ≥3 mass%, respectively.

The first solvent may be the same as that in the above [Method for Producing Recycling Feedstock Containing BCET, MCET, or TPA]. The resin containing PET may be the same as the resin containing the reaction product of a diol and terephthalic acid in [Method 1 for Producing TPA Crystals], in which the reaction product is PET.

The hydrolysis may be performed, for example, by adding water to the insolubles in the first solvent and boiling the mixture, and the boiling may be continued for 20 to 28 hours. Crystallization is typically observed during hydrolysis. Further crystallization can be confirmed upon subsequent cooling. The obtained crystals may be subjected to washing, drying, and the like.

Note that in the above [Method 1 for Producing TPA Crystals], [Method for Producing BHET Crystals], [Method for Producing Recycling Feedstock Containing BCET, MCET, or TPA], [Method 2 for Producing TPA Crystals], and [Method 3 for Producing TPA Crystals], "diol," "resin mixture containing polyethylene terephthalate," and "depolymerization product comprising terephthalic acid, MCET, and BCET" may be the same as those in the above [Method for Producing Residue for recycling].

Furthermore, in the above [Method 1 for Producing TPA Crystals], [Method for Producing BHET Crystals], [Method for Producing Recycling Feedstock Containing BCET, MCET, or TPA], [Method 2 for Producing TPA Crystals], and [Method 3 for Producing TPA Crystals], causing hydrogen chloride to act on the resin may be carried out in the same manner as "causing hydrogen chloride to act on the resin mixture containing polyethylene terephthalate" in the above [Method for Producing Residue for recycling].

### EXAMPLES

The present invention is described in detail below by way of Examples. The following Examples are provided for illustrative purposes, and the present invention is not in any way limited to the Examples described below. Unless otherwise specified, units and measurement methods described in this specification comply with JIS (Japanese Industrial Standards) regulations.

### [Example A]

Example A is described in further detail below. The present invention is not limited to Example A alone. In the description of Example A (including Tables 2, 3, and FIG. 1), terms and the like in the column "Terms used in Example A" in Table 1 below and similar terms can be replaced with the terms in the column "Interchangeable terms." Such replacement is of course permissible given the content described in Example A.

**Table 1 - Terminology Equivalences**

| | |
|---|---|
| Terms used in Example A | Interchangeable terms |
| Plastic | Resin |
| Pyrolysis residue, Thermal decomposition residue | Residue |
| Residual plastic | Residue |
| Sublimated substance, sublimate | Depolymerization product |
| Acidic substance (where not limited to "carboxylic acid compounds and their derivatives") | Dicarboxylic acids (and their derivatives generated from the resin mixture or residue) and chlorine atoms (present in the resin mixture or residue) |
| Acidic substance (where limited to "carboxylic acid compounds and their derivatives") | Dicarboxylic acids (and their derivatives generated from the resin mixture or residue) |
| Chlorine | Chlorine atoms (present in the resin mixture or residue) |
| Content rate of carboxylic acid compounds and their derivatives in the plastic mixture / Content rate of acidic substances derived from Polymer (E) / Content rate of acidic substances derived from Polymer (E) in 100 mass% of plastic mixture (mass%) α | Ratio (%) α of the total mass of dicarboxylic acids and their derivatives generated from the resin mixture to the mass of the resin mixture |
| Amount of acidic substances derived from Polymer (E) in plastic mixture β | Total mass β of dicarboxylic acids and their derivatives generated from the resin mixture |
| Chlorine content in plastic (mass%) γ | Ratio (%) γ of the mass of chlorine atoms present in the resin mixture to the mass of the resin mixture |
| Amount of acidic substances (chlorine) derived from Polymer (C) in plastic mixture δ | Mass δ of chlorine atoms present in the resin mixture |
| Amount of acidic substances in plastic mixture ε | Total mass ε of dicarboxylic acids and their derivatives generated from the resin mixture and chlorine atoms present in the resin mixture |
| Amount of acidic substances (dicarboxylic acid content) ζ in pyrolysis residue | Total mass ζ of dicarboxylic acids and their derivatives generated from the residue |
| Amount of acidic substances (chlorine) η in pyrolysis residue | Mass η of chlorine atoms present in the residue |
| Amount of acidic substances θ in pyrolysis residue | Total mass θ of dicarboxylic acids and their derivatives generated from the residue and chlorine atoms present in the residue |
| Reduction rate of acidic substances | Reduction rate (%) of the total mass of dicarboxylic acids and their derivatives generated and chlorine atoms present in the resin mixture upon conversion from the resin mixture to the residue |
| Reduction rate of chlorine | Reduction rate (%) of chlorine atoms present in the resin mixture upon conversion from the resin mixture to the residue |
| Reduction rate of amount of acidic substances (carboxylic acid compounds and their derivatives) | Reduction rate (%) of the total mass of dicarboxylic acids and their derivatives generated upon conversion from the resin mixture to the residue |

### Method for Measuring Reduction Rate of Acidic Substances in Plastic

A plastic mixture was prepared by blending PET as Polymer (E) and PVC as Polymer (C) at the blending ratios shown in Table 2 below. A portion of this mixture was sampled, and the content rate of carboxylic acid compounds and their derivatives in the plastic mixture was determined by the following method; this was taken as the content rate of acidic substances derived from Polymer (E).
Specifically, 0.1 g of the plastic mixture was added to 15 mL of methanol, 2 mL of a 35% tetrapropylammonium hydroxide aqueous solution was added, and the mixture was heated at 75°C for 7 days to decompose the ester bonds of PET by hydrolysis into soluble dialcohol and dicarboxylate salts. Subsequently, the soluble dicarboxylate salts produced by hydrolysis were quantified by HPLC after neutralization in an organic solvent, and the content rate (mass%) α of acidic substances derived from Polymer (E) in 100 mass% of the plastic mixture before Step 1 was determined. By multiplying this content rate α by the mass of the plastic mixture to be subjected to Step 1, the amount β of acidic substances derived from Polymer (E) in the plastic mixture (dicarboxylic acid content) was determined.

The content of chlorine derived from Polymer (C) in the plastic mixture before Step 1 was determined by the following method: the plastic mixture was measured by the combustion-ion chromatography method (IEC 62321-3-2 Annex C:2020 (quartz tube combustion-IC method)), and the chlorine content (mass%) γ in the plastic before the test was determined. By multiplying this content rate γ by the mass of the plastic mixture to be subjected to Step 1, the amount δ of acidic substances (chlorine) derived from Polymer (C) in the plastic mixture was determined.

Since dicarboxylic acid is a divalent acid and has twice the acid capacity of chlorine on a molar basis, the amount ε of acidic substances in the plastic mixture was calculated by adding the value obtained by multiplying the amount β of acidic substances derived from Polymer (E) in the plastic mixture (dicarboxylic acid content) by 2 to the amount δ of acidic substances (chlorine) in the plastic mixture, as shown in the following formula: 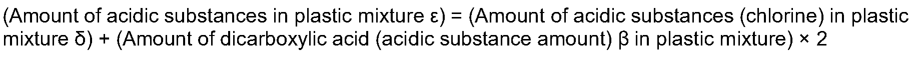 (Amount of acidic substances in plastic mixture ε) = (Amount of acidic substances (chlorine) in plastic mixture δ) + (Amount of dicarboxylic acid (acidic substance amount) β in plastic mixture) × 2

On the other hand, after the plastic mixture was reacted in a glass reaction tube under the conditions shown in Table 2 below, the solid pyrolysis residue remaining in the heated portion of the glass tube was also measured for mass and the acidic substance amount ζ (dicarboxylic acid content) and acidic substance (chlorine) amount η were measured in the same manner, and the amount θ of acidic substances in the solid pyrolysis residue was determined using the same formula.

The reduction rate of acidic substances was then calculated using the following formula: 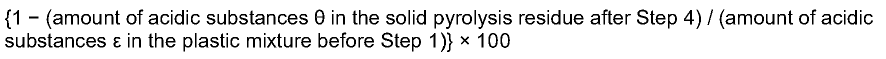 {1 - (amount of acidic substances θ in the solid pyrolysis residue after Step 4) / (amount of acidic substances ε in the plastic mixture before Step 1)} × 100

The reduction rate of chlorine was determined from the following formula: 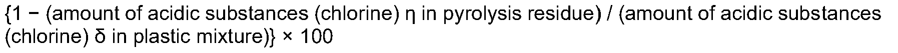 {1 - (amount of acidic substances (chlorine) η in pyrolysis residue) / (amount of acidic substances (chlorine) δ in plastic mixture)} × 100 The reduction rate of acidic substances derived from Polymer (E) (carboxylic acid compounds and their derivatives) was determined from the following formula: 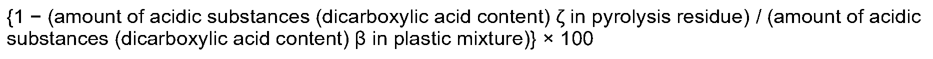 {1 - (amount of acidic substances (dicarboxylic acid content) ζ in pyrolysis residue) / (amount of acidic substances (dicarboxylic acid content) β in plastic mixture)} × 100

### Test Examples 1-18

Plastic mixtures were prepared at the blending ratios shown in Table 2 below. In the table, PET is polyethylene terephthalate, PVC is poly(vinyl chloride), PS is polystyrene, PE is polyethylene, and PP is polypropylene. The blending amounts, reaction vessel volume, and reaction time are as shown in Table 2. The reaction temperature was 350°C for Test Examples 13-15, and 330°C for all others.
Glass reaction tubes were used as reaction vessels. The plastic mixture was sealed in the reaction tube and evacuated to vacuum, and the pyrolysis test was performed. The reaction tubes were subjected to pyrolysis for the times shown in Table 2.

**Table 2 - Pyrolysis Test Conditions and Results (Test Examples 1-18)**

| **Test Example** | **Plastic Mixture** | | **Reaction vessel volume (mL)** | **Reaction time (b)** |
|---|---|---|---|---|
| | **Composition (mass ratio)** | **Charged mass (g) Top: PVC \| Middle: third component \| Bottom: PET** | | |
| **1** | **PET only** | **1.6022** | **1265** | **2** |
| **2** | **PET + PVC (8 : 1)** | **2.0051** | **1265** | **8** |
| | | **15.999** | | |
| **3** | **PET + PVC (4 : 1)** | **0.41455** | **375** | **16** |
| | | **1.60122** | | |
| **4** | **PET + PVC (3 : 1)** | **2.0217** | **1265** | **s** |
| | | **6.0788** | | |
| **5** | **PET + PVC (2 : 1)** | **2.0129** | **1265** | **8** |
| | | **4.0570** | | |
| **6** | **PVC only** | **1.5986** | **1265** | **8** |
| **7** | **PET + PE (1 : 1)** | **0.8022** | **375** | **8** |
| | | **0.8019** | | |
| **8** | **PET + PE + PVC (2 : 2 : 1)** | **0.4041** | **375** | **8** |
| | | **0.8050** | | |
| | | **0.8034** | | |
| **9** | **PE + PVC (2:1)** | **1.9100** | **1265** | **8** |
| | | **3.8131** | | |
| **10** | **PET + PP (1 : 1)** | **0.8014** | **375** | **8** |
| | | **0.8026** | | |
| **11** | **PET + PP + PVC (2 : 2 : 1)** | **0.4031** | **375** | **8** |
| | | **0.8013** | | |
| | | **0.8025** | | |
| **12** | **PP + PVC (2 : 1)** | **0.4523** | **375** | **8** |
| | | **0.9004** | | |
| **13** | **PET + PS (1 : 1)** | **0** | **375** | **8** |
| | | **0.9070** | | |
| | **350°C** | **0.8991** | | |
| **14** | **PET + PS + PVC (2 : 2 : 1)** | **0.4500** | **375** | **8** |
| | | **0.9071** | | |
| | **350°C** | **0.9054** | | |
| **15** | **PS + PVC (2 : 1)** | **0.4532** | **375** | **8** |
| | | **0.9069** | | |
| | **350°C** | | | |
| **16** | **MEsh sheet (type 1) - PET bottle (PET:PVC=2:1) (1.8340 g mesh sheet used)** | **0.4520** | **375** | **8** |
| | | **0.5905** | | |
| | | **0.9041** | | |
| **17** | **Leather sheet - PET bottle (PET:PVC=2:1) (1.0734 g leather sheet used)** | **0.4540** | **375** | **8** |
| | | **0.4476** | | |
| | | **0.9024** | | |
| **18** | **Wallpaper - PET bottle (PET:PVC=2:1) (1.3376 g wallpaper used)** | **0.9064** | **375** | **8** |
| | | **0.4312** | | |
| | | **1.8128** | | |

In Test Examples 1-18, a brown-to-black pyrolysis residue was formed at the bottom of the reaction tube. Furthermore, in Test Example 2 and others in which PVC and PET were co-present in the plastic, white sublimated deposits were confirmed in the cooling zone.

### Analysis of Sublimated Substances

The structure of the sublimated substances deposited in the cooling zone was analyzed by gas chromatography-mass spectrometry (GC/MS) and ¹H-NMR. As a result, the formation of terephthalic acid and terephthalic acid derivatives (mono(2-chloroethyl) terephthalate (MCET), bis(2-chloroethyl) terephthalate (BCET), and terephthalic acid (TPA)) was confirmed.

### Production of Terephthalic Acid

Terephthalic acid was obtained by subjecting the sublimated substances to alkaline hydrolysis treatment. Specifically, 0.1 g of the sublimated substances was added to 15 mL of methanol, 2 mL of a 35% tetrapropylammonium hydroxide aqueous solution was added, and the mixture was heated at 75°C for 7 days to hydrolyze into soluble terephthalate salt. Terephthalic acid is then generated by reacting the obtained terephthalate salt with any strong acid such as hydrochloric acid or sulfuric acid.

### Polymerization of Terephthalic Acid

1.0 g of terephthalic acid obtained by the above method and 0.54 g of reagent bis(2-hydroxyethyl) terephthalate were placed in a glass vessel, and 0.98 mL of ethylene glycol was added. After replacing the atmosphere in the glass vessel with argon gas, the mixture was heated at 255°C for 6 hours to completely dissolve all contents. The temperature was then raised stepwise to 285°C while the pressure in the glass tube was gradually reduced over 2 hours to avoid bumping of ethylene glycol. Finally, the mixture was heated at 285°C and 0.3 kPa for 30 minutes. After cooling, the solidified PET resin was pulverized and removed. (Yield: 1.45 g, 94%)

Table 3 shows the content rate and content amount of acidic substances in the plastic before pyrolysis. Furthermore, the mass, content rate, and content amount of acidic substances in the residual plastic (bottom solid) after the pyrolysis test are shown. Furthermore, the reduction rate of acidic substances by the pyrolysis test is shown. For each test example in the table, the actually measured value is shown in the upper row and a reference value (the sum of the reduction rates for PET and PVC heated separately at the blending amount of each test example (Test Example 1, Test Example 6)) is shown in the lower row.

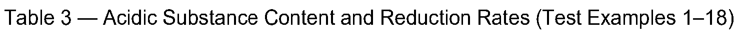

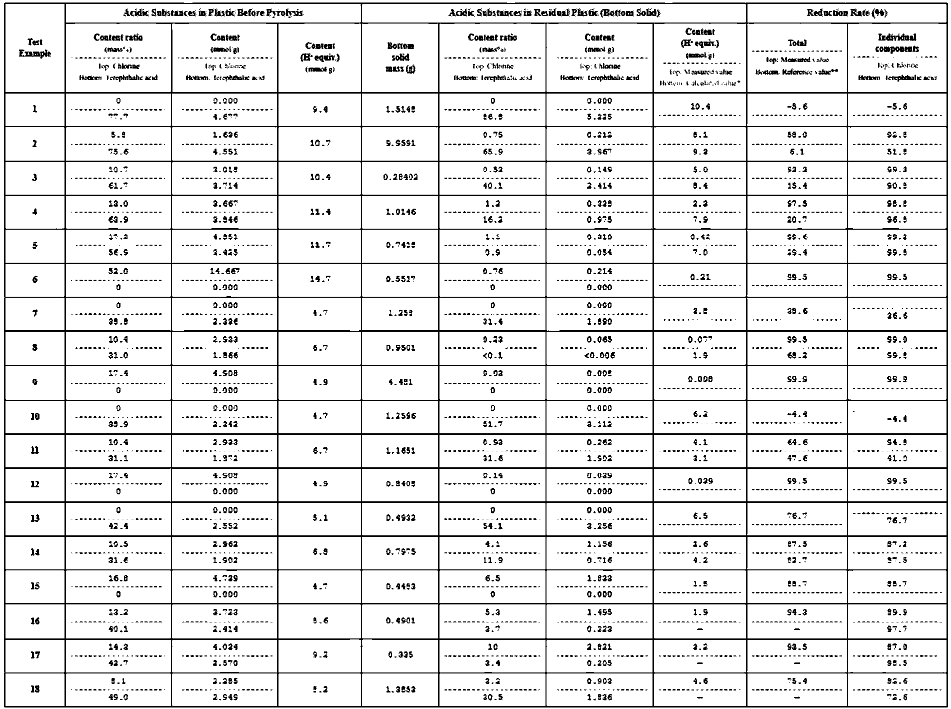

In Test Example 1, in which only PET was heated, it was confirmed that acidic substances were not reduced by heating. On the other hand, in Test Example 7, in which only PVC was heated, a high reduction rate of acidic substances was achieved. If no reaction at all occurred between PET and PVC when they were mixed and heated, the acidic substance removal rate would be expected to be the weighted average of the individual removal rates for PET and PVC heated separately multiplied by the blending ratio. However, in Test Examples 2-5, in which PET and PVC were actually mixed and heated, a clearly higher acidic substance removal rate than that expected from heating separately was observed. In particular, when PET and PVC were mixed at mass ratios of 4:1, 3:1, and 2:1, the acidic substance removal rate was remarkably high at 90% or more. Focusing on the individual reduction rates of chlorine and terephthalic acid in Test Examples 1-6, the chlorine reduction rate in Test Examples 2-5, in which PET and PVC were mixed and heated, was comparable to that of Test Example 6 (PVC heated alone), while the terephthalic acid reduction rate in Test Examples 2-5 was clearly higher than in Test Example 1. In particular, Test Examples 3-5, in which a sufficient amount of PVC was added relative to PET, showed an especially high terephthalic acid reduction rate. From these results, it is considered that the dicarboxylic acid derived from Polymer (E) of the plastic reacts with the thermal decomposition products of PVC to sublimate as a dicarboxylic acid chloride, and chlorine is removed from the plastic material. Furthermore, as shown in Test Examples 8, 11, and 14, the acidic substance removal effect of this method is also exhibited in the presence of commodity plastic materials such as PE, PP, and PS. Furthermore, as shown in Test Examples 16-18, high acidic substance removal rates of 75-94% were also achieved when PET was added to industrial waste products containing PET and PVC as components (mesh sheets and leather sheets), and wallpaper comprising PVC and cellulose, confirming the high industrial utility of this method.

According to this method, not only can the acidic substances in the pyrolysis residue be reduced by mixing and heating Polymer (E) and Polymer (C), but the amount of acidic gas derived from Polymer (C) generated in the gas phase can also be reduced. Removing acidic substances by thermally decomposing only Polymer (C) is widely practiced as described in Non-Patent Literatures 1 and 2; however, according to this method, the step of removing acidic substances and recovering the pyrolysis residue can be carried out in a reactor with relaxed corrosion resistance requirements, or the treatment equipment for the generated exhaust gas can be simplified, providing industrially beneficial effects.

Next, one example of the results of examining gas generation during pyrolysis tests is described with reference to Test Examples 19 and 20.

### Test Example 19

PET + PVC (PET 6 g, PVC 2 g) was prepared as the plastic. Next, the plastic was sealed in a glass reaction tube (1265 mL) and evacuated to vacuum, and a pyrolysis test was performed. The reaction tube was held at 330°C, and the pressure and temperature inside the vessel were measured over time (initial pressure: 57 kPa, final pressure: 12 kPa).

### Test Example 20

A pyrolysis test was performed in the same manner as Test Example 20, except that 2 g of PVC was used instead of the plastic (initial pressure: 83 kPa, final pressure: 80 kPa).

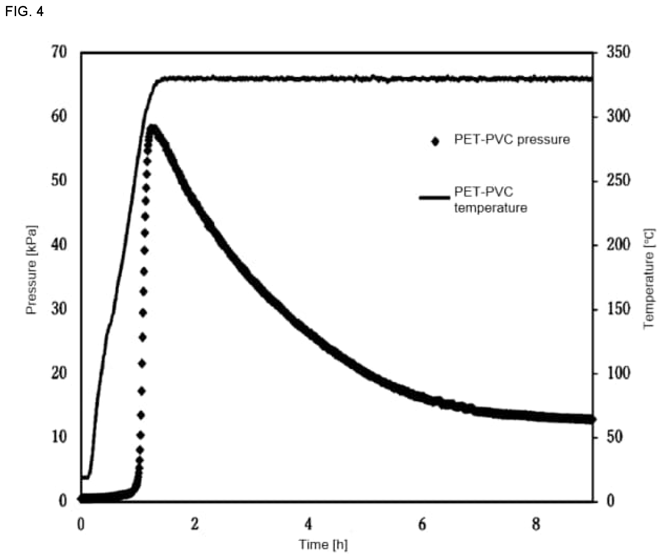

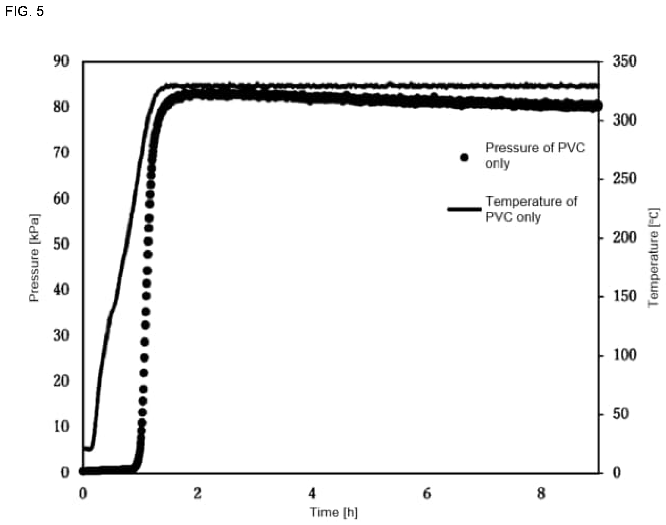

FIG. 4 shows a graph plotting pressure and temperature versus pyrolysis test time for Test Example 19. FIG. 5 shows the corresponding graph for Test Example 20. As shown in these figures, it was confirmed that the gas pressure in the gas phase decreased significantly more in Test Example 19 than in Test Example 20. This is believed to be because in Test Example 19, in which PET and PVC were co-pyrolyzed, hydrogen chloride gas was consumed through the formation of terephthalic acid derivatives and the like.

The above constitutes Example A.

Examples B-E are described in further detail below. The present invention is not limited to Examples B-E alone. In Examples B-E, unless otherwise specified, WI and YI of depolymerization products were measured by the method described below. Also in Examples B-E, unless otherwise specified, the contents of TPA, MCET, BCET, or BHET in the measurement targets were measured by HPLC.

### Measurement of WI and YI of Depolymerization Products

WI and YI of the measurement target (depolymerization product, etc.) were measured using a spectrophotometric colorimeter SQ7700 (manufactured by Nippon Denshoku Industries Co., Ltd.). Specifically, the measurement target was tightly packed into an optical glass container, and white light with a 6 mm aperture was irradiated from the bottom face of the container using the SQ7700. WI and YI were calculated by the SQ7700 based on the wavelength spectrum of the reflected light. Prior to measurement, calibration was performed so that the WI and YI values calculated by the SQ7700 using a standard white reference plate were 100 and 0, respectively.

### [Example B]

In Example B, using apparatus 106 shown in FIG. 8, evaluations were performed on depolymerization products and residues of PET obtained under the following conditions: causing hydrogen chloride gas to act on PET (Test Example B1); causing hydrogen chloride gas to act on a mixture of PET and PE (Test Example B2); heating a mixture of PET and PVC (Test Example B3); and heating PET alone (Test Example B4).

### HPLC Conditions (Example B)

In Example B, the content of TPA in the measurement target was measured by the following HPLC method. First, 0.100 g of the solid measurement target was weighed, 2 mL of a TPAOH solution and 10 mL of methanol were added dropwise thereto, and the mixture was stirred at 75°C for one week at 800 rpm. The resulting solution was diluted to 50 mL with pure water, and 0.300 mL was added to 40 mL of mobile phase. The resulting solution was subjected to HPLC to analyze TPA content. The HPLC method was set as follows:
Temperature: 40°C; Pressure: 50.0 MPa; Column flow rate: 0.30 mL/min; Column type: AQ-C18 1.9 µm; Mobile phase: mixed solution of 0.05 vol% phosphoric acid aqueous solution:methanol = 65:35; Detection wavelength: 236 nm (wavelength 1), 254 nm (wavelength 2)

### High-Temperature GPC Analysis (Example B)

In Example B, the weight-average molecular weight of the measurement target was determined by the following high-temperature GPC analysis. First, the sample was weighed to give a concentration of 1 mg/mL, a solvent (tetrachlorobenzene with 0.1 wt% butylated hydroxytoluene added) was added, and the mixture was dissolved by shaking at 140°C for 1 hour. The resulting solution was analyzed using a Tosoh HLC-8321 GPC/HT (detector: RI, manufactured by Tosoh Corporation), and the weight-average molecular weight (Mw) was obtained from the resulting molecular weight distribution curve. Polystyrene was used as the molecular weight standard.

The fifth container 28 and third container 24 of FIG. 8 used in Example B were equipped with separable flasks (1 L), and pump 36a was equipped with a gas bag.

### Test Example B1

5.0035 g of an empty PET bottle of "I LOHAS" (registered trademark) Natural Water (manufactured by The Coca-Cola Company) as PET was charged into the fifth container 28, and 7.0072 g of PVC (manufactured by Fujifilm Wako Pure Chemical Corporation, n: about 1050) was charged into the third container 24. The entire apparatus 106 was then evacuated to vacuum (1 kPa). The fourth container 26 was cooled to -60°C and maintained at that temperature. Subsequently, the third container 24 was heated to 330°C and maintained at 330°C for 1 hour to thermally decompose PVC, thereby generating hydrogen chloride gas. During heating, stopcock 34a was set to the open state, stopcock 36b was set such that communication between the fourth container 26 and pump 36a was open, while communication between the fourth container 26 and the fifth container 28 was closed, and communication between pump 36a and the fifth container 28 was closed. The hydrogen chloride gas generated as described above was passed through the fourth container 26 to solidify, sublimate, or otherwise remove impurities other than hydrogen chloride, thereby collecting the resulting high-purity hydrogen chloride gas in pump 36a. Subsequently, stopcocks 36b and 36c were operated to open communication between pump 36a and the fifth container 28, and the hydrogen chloride gas was introduced into the fifth container 28. Subsequently, stopcock 36c was set to the closed state, the fifth container 28 was heated to 330°C and maintained at 330°C for 8 hours to generate the depolymerization product. Subsequently, the fifth container 28 was cooled, the atmosphere was introduced, and the depolymerization product that had deposited inside was scraped off and recovered. The mass (g), WI, YI, and TPA recovery rate (%) of the recovered depolymerization product were measured. In addition, the presence or absence of residue after causing hydrogen chloride gas to act on PET in the fifth container 28 was confirmed, and if residue was confirmed, the mass (g) and TPA residual rate (%) were measured. Here, the solid present at the bottom of the fifth container 28 after the reaction was completed was taken as the residue.

### Test Example B2

Instead of charging 5.0035 g of an empty PET bottle of "I LOHAS" (registered trademark) Natural Water (manufactured by The Coca-Cola Company) as PET into the fifth container 28 and 7.0072 g of PVC (manufactured by Fujifilm Wako Pure Chemical Corporation, n: about 1050) into the third container 24, the following charges were made: into the fifth container 28, 1.0785 g of an empty PET bottle of "I LOHAS" (registered trademark) Natural Water (manufactured by The Coca-Cola Company) as PET and 5.0074 g of PE (Hi-Zex 6200BPU, HDPE, molecular weight 150,000); into the third container 24, 7.0073 g of PVC (manufactured by Fujifilm Wako Pure Chemical Corporation, n: about 1050). Otherwise, the same procedure as in (Test Example B1) was followed. In addition, the weight-average molecular weight of the residue was measured. For reference, the weight-average molecular weight of the PE used as the starting material (Hi-Zex 6200BPU, HDPE, molecular weight 150,000; hereinafter also referred to as "starting PE") was also measured.

### Test Example B3

5.0046 g of an empty PET bottle of "I LOHAS" (registered trademark) Natural Water (manufactured by The Coca-Cola Company) as PET and 7.0195 g of PVC (manufactured by Fujifilm Wako Pure Chemical Corporation, n: about 1050) were charged into the fifth container 28. Subsequently, the fifth container 28 was evacuated to vacuum, and stopcock 36c was set to the closed state. Subsequently, the fifth container 28 was heated to 330°C and maintained at 330°C for 8 hours to generate the depolymerization product. Subsequently, the fifth container 28 was cooled, the atmosphere was introduced, and the depolymerization product that had deposited inside was scraped off and recovered. The mass (g), WI, YI, and TPA recovery rate (%) of the recovered depolymerization product were measured. In addition, the presence or absence of residue after causing hydrogen chloride gas to act on PET in the fifth container 28 was confirmed, and if residue was confirmed, the mass (g) and TPA residual rate (%) were measured. Here, the solid present at the bottom of the fifth container 28 after the reaction was completed was taken as the residue.

### Test Example B4

Instead of charging "5.0046 g of an empty PET bottle of 'l LOHAS' (registered trademark) Natural Water (manufactured by The Coca-Cola Company) as PET and 7.0195 g of PVC (manufactured by Fujifilm Wako Pure Chemical Corporation, n: about 1050)" into the fifth container 28, 5.0232 g of an empty PET bottle of "I LOHAS" (registered trademark) Natural Water (manufactured by The Coca-Cola Company) as PET was charged into the fifth container 28. Otherwise, the same procedure as in (Test Example B3) was followed.

The results of Test Examples B1-4 are shown in Table 4. In Table 4, "TPA residual rate (%)" indicates the ratio of the amount of terephthalic acid obtained by hydrolyzing the residue to the amount of terephthalic acid obtained by hydrolyzing the same amount of PET as the amount of PET charged. "TPA recovery rate (%)" indicates the ratio of the amount of terephthalic acid obtained by hydrolyzing the depolymerization product to the amount of terephthalic acid obtained by hydrolyzing the same amount of PET as the amount of PET charged. In the "TPA residual rate (%)" and "TPA recovery rate (%)", since they are calculated as described above, derivatives of terephthalic acid in the residue and depolymerization product are converted as the amount of terephthalic acid.

**Table 4 - Test Examples B1-B4 Results**

| | | Test Example B1 | Test Example B2 | Test Example B3 | Test Example B4 |
|---|---|---|---|---|---|
| 5th container | PET charged (g) | 5.0035 | 1.0785 | 5.0046 | 5.0232 |
| | PE charged (g) | - | 5.0074 | - | - |
| | PVC charged (g) | - | - | 7.0195 | - |
| 3rd container | PVC charged (g) | 7.0072 | 7.0073 | - | - |
| Residue | Mass (g) | * trace only | 4.9935 | 2.9404 | 4.571 |
| | TPA residual rate (%) | - | <0.5 | 1.8 | 92.2 |
| Depolymerization product | Mass (g) | 5.0477 | 1.1138 | 5.1501 | 0.2496 |
| | WI | 89.7 | 79.0 | 65.8 | - |
| | YI | 13.6 | 19.1 | 29.8 | - |
| | TPA recovery rate (%) | 91.6 | 90.4 | 88.1 | 4.0 |

| | | | | | |
|---|---|---|---|---|---|
| * Only a very small amount of brown-colored material was confirmed. | | | | | |

As shown in Table 4, the TPA recovery rate in Test Example B4 was 4.0%; however, in Test Examples B1 and B3, high TPA recovery rates of 91.6% and 88.1%, respectively, were achieved. This demonstrates that PET can be depolymerized at high efficiency both by causing hydrogen chloride gas to act on PET directly and by causing the hydrogen chloride gas generated by thermal decomposition of PVC to act on PET. Furthermore, in Test Example B1, only a very small amount of brown-colored material was confirmed as residue, indicating that essentially all or nearly all of the PET can be depolymerized by causing hydrogen chloride to act on PET. Based on this, the residues in Test Examples B2 and B3 are considered to derive from PE and PVC, respectively. Furthermore, since the WI of Test Example B1 was greater than that of Test Example B3, and the YI of Test Example B1 was smaller than that of Test Example B3, it was shown that applying PET with hydrogen chloride gas to depolymerize PET yields a depolymerization product with less coloration compared to co-heating PET and PVC together. Furthermore, in Test Example B2, since the PE charge amount was 5.0074 g and the residue was 4.9935 g, it was shown that a high-yield recovery of PE from which PET had been removed can be obtained by causing hydrogen chloride to act on a mixture of PET and PE.

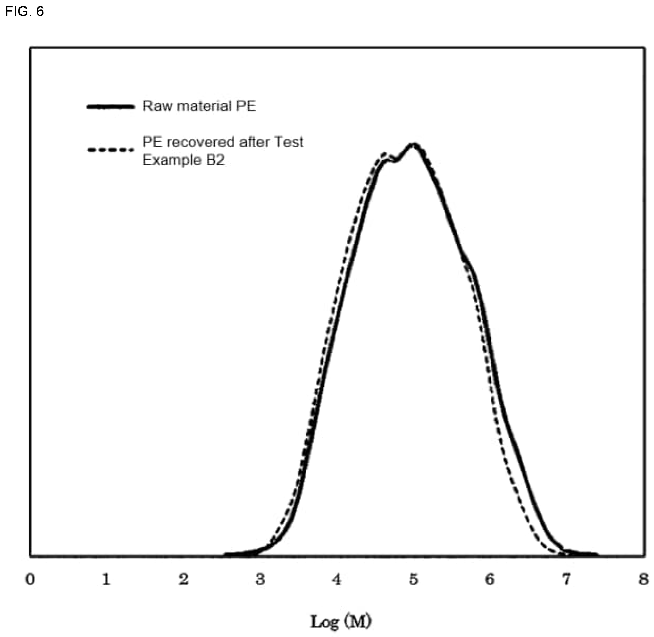

FIG. 6 shows the molecular weight distribution curves of the residue obtained in Test Example B2 and the starting PE. The weight-average molecular weights (Mw) of the residue and starting PE were 371,000 and 265,000, respectively. As described above, the residue in Test Example B2 is considered to derive from PE; however, since the mass of the "residue" in Table 4 is 4.9935 g, which is essentially unchanged from the "PE charge" of 5.0074 g, it is considered that thermal decomposition of PE barely proceeded in Test Example B2, and the residue is mostly composed of PE. Furthermore, in FIG. 6, the molecular weight distribution curves of the residue from Test Example B2 and the starting PE showed nearly the same shape. From the above, it was shown that when hydrogen chloride acts on a mixture of PET and PE, a residue mainly composed of PE is obtained that has an almost unchanged molecular weight distribution curve compared to the starting PE.

### [Example C]

In Example C, using apparatus 104 shown in FIG. 7, a depolymerization product containing a carboxylic acid or a derivative thereof was produced from a resin mixture containing Polymer E.

### HPLC Conditions (Example C)

In Example C, the TPA content of the measurement target was measured by the following HPLC method. 0.100 g of the solid measurement target was weighed, 2 mL of a TPAOH solution and 10 mL of methanol were added dropwise thereto, and the mixture was stirred at 75°C for one week at 800 rpm. The resulting solution was diluted to 50 mL with pure water, and 0.300 mL was added to 40 mL of mobile phase (a 4:1 mixture of 0.05 vol% H₃PO₄ aqueous solution:methanol). The resulting solution was subjected to HPLC to analyze TPA content. The HPLC method was set as follows:
Temperature: 40°C; Pressure: 50.0 MPa; Column flow rate: 0.30 mL/min; Column type: AQ-C18 1.9 µm (Lot No.: RAQ2-6366); Solvent: mixed solution of 0.05 vol% phosphoric acid aqueous solution:methanol = 65:35; Detection wavelength: 236 nm (wavelength 1), 254 nm (wavelength 2); Time: 10 min

Using apparatus 104 shown in FIG. 7, a depolymerization product containing a carboxylic acid or a derivative thereof was produced from an empty PET bottle of "I LOHAS" (registered trademark) Natural Water (manufactured by The Coca-Cola Company) as PET, and PVC (JAN: 4987481347557, manufactured by Fujifilm Wako Pure Chemical Corporation) (Test Examples C1-6).

The components of apparatus 104 shown in FIG. 7 used in Example C were as follows. It was confirmed that the gas in apparatus 104 circulated inside apparatus 104 in the order: first container → first communication pipe → second container → second communication pipe → first container. The inside of apparatus 104 was evacuated to vacuum using a vacuum rotary pump, and the absence of leaks was confirmed using pressure gauge 32a described below.
First container 20 and second container 22: equipped with a separable flask (1 L), a fluoro-rubber O-ring attached to the upper recess of the separable flask, and a two-neck separable cover attached to the separable flask via the O-ring. On the outside of the first container 20, an electric furnace for heating the separable flask and the two-neck separable cover was installed.
First communication pipe 30: a U-shaped glass tube with an outer diameter of 20 mm was used. The U-shaped glass tube was coated with fluorine grease at the ground glass joint portions, thereby fitting closely to the first container 20 and the second container 22. The outlet of the U-shaped glass tube into the second container 22 was positioned near the bottom of the second container 22 so that the discharged gas would reach the bottom. A heater for heating the first communication pipe 30 was installed outside the first communication pipe 30.
Second communication pipe 32: equipped with a Toyoron hose-connecting glass tube connected to the second container 22, a pressure gauge 32a with a range of approximately 0.5 kPa to atmospheric pressure, a circulating diaphragm pump 32b, a flow meter 32c, a Toyoron hose-connecting glass tube connected to the first container 20, and Toyoron hoses with an outer diameter of 9 mm connecting these in this order. A data logger was connected to pressure gauge 32a.

In Test Examples C1-6, 6.6 g of an empty PET bottle of "I LOHAS" (registered trademark) Natural Water (manufactured by The Coca-Cola Company) as PET and 3.3 g of PVC (JAN: 4987481347557, manufactured by Fujifilm Wako Pure Chemical Corporation) were charged into the first container 20 at a mass ratio of PET:PVC = 2:1. The inside of apparatus 104 was evacuated to vacuum using the vacuum rotary pump. Subsequently, the electric furnace installed outside the first container 20 was heated to 330°C at a rate of 5°C/min, thereby heating the separable flask of the first container to 330°C. The separable flask was then held at 330°C for 8 hours to allow the reaction to proceed. During this time, the separable cover of the first container was heated to the temperature shown in Table 5, or was not heated. When heating the electric furnace to 330°C as described above, the heater installed outside the first communication pipe 30 was used to raise the temperature of the center portion of the U-shaped glass tube of the first communication pipe and the end portion of the U-shaped glass tube on the second container side to the temperatures shown in Table 5 below. During the reaction, the gas inside apparatus 104 was circulated by the circulating diaphragm pump 32b at the circulation flow rate shown in Table 5 in the order: first container → first communication pipe → second container → second communication pipe → first container. Leakage of gas outside apparatus 104 during the reaction and measurement of the reaction rate were performed using the pressure gauge. The reaction rate was evaluated based on the consumption of hydrogen chloride gas.

**Table 5 - Experimental Conditions for Test Examples C1-C6**

| | Heating temperature (°C) | | | | Circulation flow rate (L/min) |
|---|---|---|---|---|---|
| | 1st container | | 1st comm. pipe | | |
| | Separable flask | Separable cover | Center | 2nd-containerside end | |
| Test Example C1 | 330 | No heating | No heating | No heating | No circulation |
| Test Example C2 | 330 | No heating | No heating | No heating | 0.4 |
| Test Example C3 | 330 | No heating | No heating | No heating | 1.5 |
| Test Example C4 | 330 | 250 | 250 | 150 | 0.4 |
| Test Example C5 | 330 | 280 | 250 | 200 | 0.4 |
| Test Example C6 | 330 | 280 | 250 | 200 | 1.5 |

The above reaction generated a solid depolymerization product. After the reaction was complete, apparatus 104 was disassembled, and the depolymerization product accumulated in the separable flask and two-neck separable cover of the first container 20, the first communication pipe 30, and the second container 22 were each recovered, and the mass, WI, and YI were measured. The results are shown in Table 6. Note that in Table 2, "proportion (%)" indicates the proportion (%) of the depolymerization product (g) at each location, with the total recovered depolymerization product (g) taken as 100%. Furthermore, Table 7 shows the percentage (mol%) of TPA, MCET, and BCET in the depolymerization product recovered from each location in Test Example C6, relative to the total amount of substance of the depolymerization product.

**Table 6 - Depolymerization Product Mass, WI, YI by Location (Test Examples C1-C6)**

| | Test example C1 | | Test example C2 | | Test example C3 | |
|---|---|---|---|---|---|---|
| Location | Mass (g) | Proportion (%) | Mass (g) | Proportion (%) | Mass (g) | Proportion (%) |
| Separable flask (1st container) | 3.9073 | 83.8 | 3.6591 | 73.2 | 1.3305 | 20.0 |
| Separable cover (1st container) | 0.6871 | 14.7 | 0.6468 | 12.9 | 3.6980 | 55.5 |
| 1st communication pipe | 0.046 | 0.99 | 0.690 | 13.8 | 1.164 | 17.5 |
| 2nd container | 0.021 | 0.45 | <0.1 | - | 0.467 | 7.0 |

| | Test example C4 | | Test example C5 | | | | Test example C6 | | | |
|---|---|---|---|---|---|---|---|---|---|---|
| Location | Mass (g) | Proportion (%) | Mass (g) | Proportion (%) | WI | YI | Mass (g) | Proportion (%) | WI | YI |
| Separable flask (1st container) | 2.1687 | 43.4 | 1.2061 | 19.7 | 65.8 | 29.8 | 0.286 | 3.6 | 71.3 | 23.5 |
| Separable cover (1st container) | 2.0307 | 40.6 | 0.3868 | 6.3 | | | 0.079 | 1.0 | | |
| 1st communication pipe | 0.563 | 11.3 | 2.972 | 48.6 | 73.0 | 34.2 | 0.706 | 8.9 | 68.1 | 40.0 |
| 2nd container | 0.234 | 4.7 | 1.551 | 25.4 | 78.2 | 26.6 | 6.863 | 86.5 | 90.9 | 9.4 |

**Table 7 - Composition of Depolymerization Product at Each Location (Test Example C6)**

| Location (Test Example C6) | TPA [mol%] | MCET [mol%] | BCET [mol%] | Total |
|---|---|---|---|---|
| Separable flask and cover (1st container) | 4.6 | 0.01 | <0.01 | 4.6 |
| 1st communication pipe | 8.6 | 0.20 | 0.05 | 8.9 |
| 2nd container | 6.9 | 50.4 | 29.3 | 86.5 |
| Total | 20.1 | 50.6 | 29.4 | 100 |

As shown in Table 6, in at least Test Examples C1 and C3-C6, a depolymerization product containing BCET, MCET, and TPA accumulated in the second container 22. This is believed to be because hydrogen chloride generated by thermal decomposition of PVC acted on PET, thereby generating a depolymerization product containing BCET, MCET, and TPA, and at least a portion of this depolymerization product was guided in a gaseous state into the second container 22, where it became a solid. Comparing Test Example C1 (no circulation) with Test Example C3 (circulation flow rate: 1.5 L/min), the greater amount of depolymerization product (g) in the second container 22 in C3 compared to C1, and comparing Test Example C5 (0.4 L/min) with C6 (1.5 L/min), the greater amount in C6 compared to C5, demonstrate that increasing the circulation flow rate can increase the depolymerization product guided in a gaseous state into the second container 22. Furthermore, comparing Test Examples C2 (weakest heating conditions) and C4 (intermediate heating temperature) with C5 (high heating temperature), and C3 (weakest heating) with C6 (high heating temperature), the greater amount in C5 vs. C4 and in C6 vs. C3 demonstrate that, at least within the temperature range shown in Table 6, increasing the temperature of the first container and first communication pipe can increase the depolymerization product guided in a gaseous state into the second container 22. Furthermore, the values in Table 7 show that MCET and BCET in particular were efficiently transported to the second container 22.

Furthermore, comparing the WI and YI of the depolymerization product of Test Example C6 with those of Test Example B3, the WI of Test Example C6 was greater and the YI was smaller than those of Test Example B3. This demonstrates that coloration of the depolymerization product can be suppressed by separating it from the depolymerization reaction system and guiding it into the second container 22.

### [Example D]

In Example D, BCET (Test Example D1), MCET (Test Example D2), and TPA (Test Example D2) were obtained by solvent separation from the depolymerization product obtained in Example A Test Example 19.

### Test Example D1

20.39 g of the depolymerization product was weighed into an Erlenmeyer flask, and 100 mL of toluene was added and stirred. The resulting toluene-insoluble solid and supernatant liquid were separated by filtration or centrifugation, and the supernatant was collected in a separate container. Subsequently, 100 mL of toluene was added to the insoluble solid and stirred, and the operations of separating the toluene-insoluble solid from the supernatant and recovering them were repeated 3 times. All of the insoluble solids obtained were combined and used in (Test Example D2) below. All of the supernatants obtained were combined and toluene was removed to obtain Toluene-Soluble Product 1. The yield of Toluene-Soluble Product 1 was 7.85 g. Toluene-Soluble Product 1 was confirmed to be BCET by ¹H-NMR. Furthermore, Toluene-Soluble Product 1 was dissolved in 26 mL of a mixed solvent of 15 vol% ethanol and 85 vol% hexane and cooled to recrystallize BCET, yielding 7.05 g of pure BCET.

### Test Example D2

12.05 g of the insoluble solid obtained above was charged into an Erlenmeyer flask, and 100 mL of ethyl acetate was added and stirred. The ethyl acetate-insoluble solid and the supernatant liquid were separated by filtration or centrifugation, and the supernatant was collected in a separate container. Subsequently, 100 mL of ethyl acetate was added to the insoluble solid and stirred, and the operations of separating the ethyl acetate-insoluble solid from the supernatant and recovering them were repeated 7 times. All of the ethyl acetate-insoluble solids obtained were combined to yield Insoluble Solid 1. Insoluble Solid 1 was confirmed to be TPA by ¹H-NMR. All of the supernatants obtained from the ethyl acetate operations were combined and ethyl acetate was removed to yield Ethyl Acetate-Soluble Product 1. The yield of Ethyl Acetate-Soluble Product 1 was 12.86 g. Ethyl Acetate-Soluble Product 1 was confirmed to be MCET by ¹H-NMR. Furthermore, Ethyl Acetate-Soluble Product 1 was dissolved in a mixed solvent of 60 mL of ethyl acetate and 10 mL of ethanol and cooled to recrystallize MCET, yielding 5.43 g of pure MCET.

From the results of (Test Example D1) and (Test Example D2) above, it was demonstrated that the depolymerization product generated by causing a depolymerization agent such as hydrogen chloride to act on a resin mixture containing PET can be fractionated into BCET, MCET, and TPA by solvent separation using toluene and ethyl acetate.

### [Example E]

In Example E, as described below, TPA (Test Examples E1 and E3) or BHET (Test Example E2) was obtained from the depolymerization product obtained in Example A Test Example 19. In addition, in Test Example E1, PET was obtained from the TPA obtained. HPLC and ¹H-NMR analysis of the depolymerization product demonstrated that it contains TPA, BCET, and MCET.

### HPLC Conditions (Test Examples E1 and E2)

The TPA content in the measurement target for Test Example E1, and the contents of TPA, MCET, BCET, and BHET for Test Example E2, were measured by the following HPLC method. First, 20 mg of the measurement target was weighed into a tared empty screw vial 1 and charged, then the vial 1 was weighed. Next, 10 mL of DMF was charged into screw vial 1, stirred well, and then weighed. Next, screw vial 2 was prepared, weighed empty, then 9 mL of DMF was charged and weighed. 1 mL of the solution from screw vial 1 was charged into screw vial 2 and weighed. Next, empty screw vial 3 was prepared and weighed, then 10 mL of mobile phase was charged and weighed. Subsequently, 300 µL was taken from the solution in screw vial 1 and charged into screw vial 3, which was then weighed. Subsequently, the solution in screw vial 3 was transferred to a 1.5 mL vial and subjected to HPLC to analyze the TPA content. The HPLC method was set as follows:
Temperature: 40°C; Pressure: 50.0 MPa; Column flow rate: 0.30 mL/min; Column type: AQ-C18 1.9 µm (Lot No.: RAQ2-6366); Solvent: mixed solution of 0.05 vol% phosphoric acid aqueous solution:methanol = 60:40; Detection wavelength: 236 nm (wavelength 1), 254 nm (wavelength 2); Time: 20 min (alkalinehydrolyzed sublimated substance)

### HPLC Conditions (Test Example E3)

In Test Example E3, the TPA content of the measurement target was measured by the following HPLC method. First, 0.100 g of the solid measurement target was weighed and dissolved in 40 mL of DMF, and 0.300 mL of the resulting solution was added to 40 mL of mobile phase. The resulting solution was subjected to HPLC to analyze TPA content. The HPLC method was set as follows:
Temperature: 40°C; Pressure: 50.0 MPa; Column flow rate: 0.30 mL/min; Column type: AQ-C18 1.9 µm; Mobile phase: mixed solution of 0.05 vol% phosphoric acid aqueous solution:methanol = 65:35; Detection wavelength: 236 nm (wavelength 1), 254 nm (wavelength 2)

In Test Examples E1-3, the yield of TPA refers to the percentage (%) of the amount of substance of terephthalic acid in the measurement target relative to the amount of terephthalic acid obtained by subjecting the same amount of the depolymerization product to hydrolysis. The hydrolysis was carried out as follows: a centrifuge tube with a stir bar was weighed, 0.1 g of the depolymerization product was charged and weighed. Then 2 mL of tetrapropylammonium hydroxide and 10 mL of methanol were charged into the centrifuge tube. The reaction was then carried out in a personal organic synthesis apparatus for 7 days at 75°C and 800 rpm with stirring. During this time, tetrapropylammonium hydroxide and methanol were added as appropriate to prevent the solvent in the centrifuge tube from drying out. By the above operations, the depolymerization product was hydrolyzed.

### ¹H-NMR Analysis (Test Example E1)

In Test Example E1, ¹H-NMR analysis was performed by the following procedure. First, an empty screw vial was weighed, 8 mg of the measurement target was weighed and charged into the screw vial, and the screw vial was weighed. Subsequently, 500 µL of DMSO-d₆ was charged and the screw vial was weighed. Subsequently, an NMR tube was prepared and weighed empty, and 50 µL from the screw vial solution was dispensed into the NMR tube. The NMR tube was then weighed. 600 µL of DMSO-d₆ was charged into the NMR tube, and the NMR tube was weighed. Subsequently, analysis was performed using a JNM-ECX500 (manufactured by JEOL Ltd.).

### GPC Analysis (Test Example E1)

In Test Example E1, the molecular weight of PET was measured by GPC analysis. Specifically, an empty test tube was weighed, 25 mg of the PET measurement target was weighed and charged into the test tube, and the test tube was weighed. Subsequently, 0.5 mL of o-chlorophenol was charged into the test tube and weighed. The test tube was then heated at 130°C without stirring to dissolve the measurement target in o-chlorophenol. After dissolution, 9.5 mL of chloroform was charged into the test tube, gently shaken, and weighed. Subsequently, an empty screw vial was prepared and weighed, 2 mL of the solution from the test tube was charged and the screw vial was weighed. Subsequently, 3 mL of chloroform was charged into the screw vial and weighed. Subsequently, the solution in the screw vial was transferred to a 1.5 mL vial and subjected to GPC analysis. The GPC analysis conditions were as follows:
Temperature: 40°C; Column flow rate: 0.80 mL/min; Column type: TSKgel SuperHM-M (Part No.: 0018000, Column No.: 901KA00077K); Solvent: chloroform; Wavelength: 254 nm; Analysis time: 25 min

### DSC Measurement (Test Example E1)

In Test Example E1, the crystallization temperature and melting point of PET were determined by DSC measurement. Specifically, approximately 10 mg of PET was sealed in an aluminum capsule, and as pretreatment, it was heated to 300°C, held for 10 minutes to melt, and then rapidly cooled to render the PET amorphous. Subsequently, using a DSC6200 (manufactured by Seiko Instruments Inc.), the temperature was raised from room temperature to 300°C at a rate of 10°C/min, and the heat absorption/generation of the sample was measured.

### Test Example E1

In Test Example E1, the depolymerization product was hydrolyzed in water to obtain TPA crystals (Test Example E1-1), and the depolymerization product was hydrolyzed in an organic solvent containing water to obtain TPA crystals (Test Example E1-2).

### Test Example E1-1

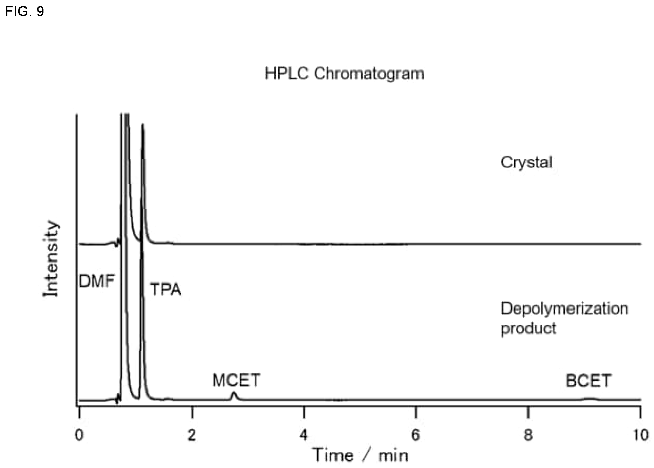

5.00 g of the depolymerization product was weighed and charged into an autoclave with a Teflon liner (TAS-100, manufactured by Taiatsu Glass Industry Co., Ltd.). Subsequently, 50 mL of distilled water was charged and weighed. The mixture was then heated at 210°C for 4 hours in an oven. After heating, the autoclave was removed and allowed to stand at room temperature overnight, then opened. Crystals were confirmed inside the autoclave. The crystals were filtered under reduced pressure using a membrane filter. During filtration, the crystals were washed with methanol, and the wash solution was also collected along with the filtrate. The crystals were dried overnight at 70°C by vacuum desiccation, and the yield was calculated after weighing the dried crystals: 3.03 g. The chromatogram from HPLC analysis of these crystals and the depolymerization product under the conditions described above is shown in FIG. 9. The purity of TPA, yield of TPA, WI, YI, and color appearance observed visually in the crystals are shown in Table 9 below. Hereinafter, these crystals are also referred to as "crystals (distilled water)."

Although the depolymerization product had extremely low solubility in water, it was demonstrated that MCET and BCET in the depolymerization product could be converted to TPA by carrying out the reaction under high-temperature or high-temperature and high-pressure conditions as described above.

As shown in FIG. 9, peaks for TPA as well as MCET and BCET were detected in the depolymerization product; however, in the crystals (distilled water), while a peak for TPA was detected, peaks for MCET and BCET were not detected. This also demonstrates the high purity of TPA in the crystals (distilled water).

### Test Example E1-2

In Test Example E1-2, the depolymerization product was hydrolyzed in a solvent containing DMI, NMP, or DMAc. Specifically, the depolymerization product was weighed into a glass test tube containing a stir bar in the amount (g) shown in Table 8 below, and the organic solvents in the amounts shown in Table 8 were charged into the test tube. The test tube was then heated and stirred at 130°C and 600 rpm to completely dissolve the depolymerization product in the solvent. After confirming complete dissolution, distilled water in an amount of 1/5 by mass relative to the depolymerization product was added. The reaction was then carried out at 130°C and 600 rpm with stirring for 24 hours. Crystal formation was confirmed during the reaction. Subsequently, the test tube was removed from the heating stirrer and allowed to cool at room temperature overnight, whereby further crystal formation was observed. The liquid portion was filtered under reduced pressure using a membrane filter and collected in a centrifuge tube. During filtration, the crystals were washed with methanol, and the wash solution was also collected in the centrifuge tube along with the filtrate. The filtered crystals were dried overnight at 70°C by vacuum desiccation. The dried crystals were weighed and the yield was calculated. The purity of TPA, yield of TPA, WI, YI, and color appearance observed visually in the crystals are shown in Table 9 below. Hereinafter, crystals obtained using DMI, NMP, and DMAc-containing solvents as described above are also referred to as "crystals (DMI)," "crystals (NMP)," and "crystals (DMAc)," respectively.

**Table 8 - Organic Solvent and Depolymerization Product Amounts (Test Example E1-2)**

| Organic solvent | Amount charged (mL) | Depolymerization product charged (g) |
|---|---|---|
| DMI | 9 | 5 |
| NMP | 10 | 5 |
| DMAc | 3.5 | 1 |

**Table 9 - TPA Yield, Purity, WI, YI, and Color (Test Examples E1-1 and E1-2)**

| | Solvent | TPA yield (%) | TPA purity (mol%) | WI | YI | Color appearance |
|---|---|---|---|---|---|---|
| Test Example E1-1 | Distilled water | 80.2 | 100 | 67.2 | 35.3 | Colored |
| Test Example E1-2 | DMI + distilled water | 86.4 | 99.7 | 83.0 | 11.3 | White |
| | NMP + distilled water | 61.5 | 79.0 | 85.5 | 19.1 | Slightly colored |
| | DMAc + distilled water | 18.4 | 53.5 | - | - | Colored |

As shown in Table 9, it was demonstrated that hydrolyzing the depolymerization product using distilled water alone or a mixed solvent of DMI and distilled water gives a high TPA yield and high TPA purity. It was also demonstrated that using a mixed solvent of DMI and distilled water yields white TPA. Furthermore, the molar ratio of BCET:MCET:TPA in the depolymerization product was approximately 1:2:1, and the purity of TPA in the depolymerization product was approximately 20-30%. Therefore, it can be said that the purity of TPA in the crystals of Test Examples E1-1 and E1-2 increased from the purity of TPA in the depolymerization product.

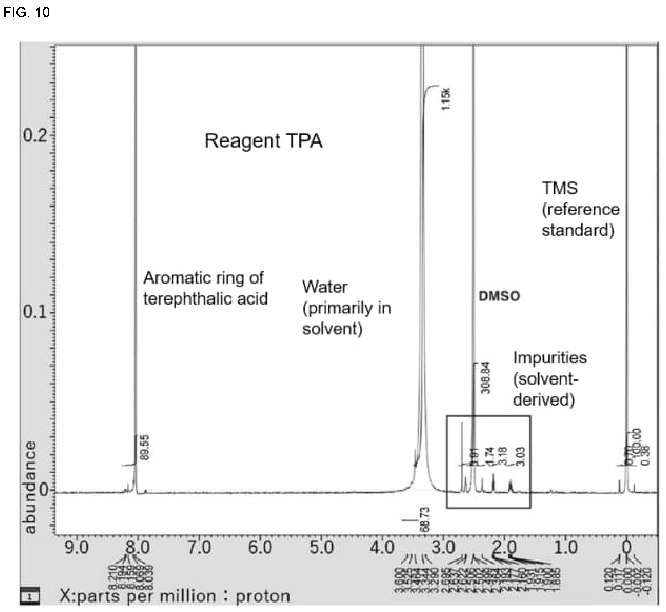

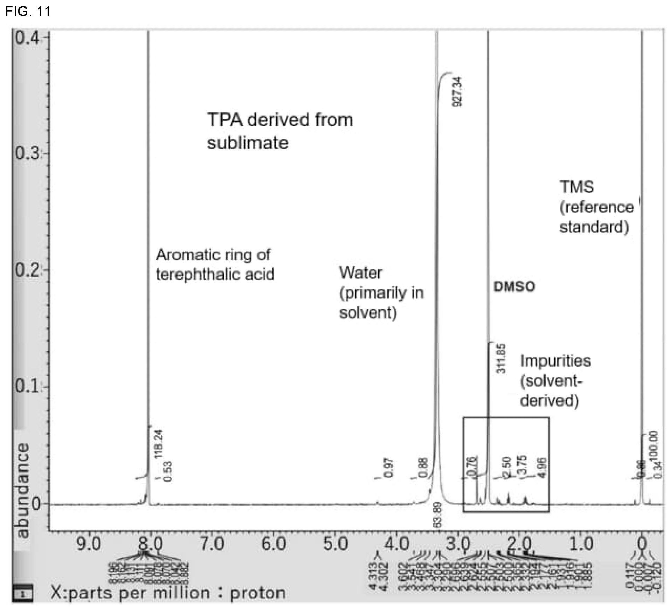

FIG. 10 shows the ¹H-NMR spectrum of TPA (manufactured by Tokyo Chemical Industry Co., Ltd.), and FIG. 11 shows the ¹H-NMR spectrum of crystals (NMP). As shown in FIGS. 10 and 11, these ¹H-NMR spectra are similar, suggesting that the purity of crystals (NMP) is comparably high to that of TPA (manufactured by Tokyo Chemical Industry Co., Ltd.).

Subsequently, PET was synthesized by melt polymerization or solid-state polymerization using crystals (NMP), crystals (DMI), or TPA (manufactured by Tokyo Chemical Industry Co., Ltd.; hereinafter also referred to as "commercial TPA") as starting materials.

### Synthesis of PET by Melt Polymerization

An empty glass sealed tube (inner volume approximately 20 mL) was weighed, and crystals (NMP), crystals (DMI), or commercial TPA were charged and weighed. BHET (manufactured by Tokyo Chemical Industry Co., Ltd.) was charged into the glass sealed tube in an amount of approximately 1/4 molar equivalent relative to the TPA charged, and weighed. Dehydrated ethylene glycol in which Sb₂O₃ was dissolved as a catalyst was charged into the glass sealed tube such that Sb was 300 ppm, and weighed. The inside of the sealed tube was then replaced with Ar and heating was started. The temperature was raised at 5°C/min to 255°C, and the sealed tube was maintained at 255°C with appropriate shaking until all TPA dissolved. Once the contents of the sealed tube had all become a clear liquid, the temperature was raised from 255°C to 265°C at 2°C/min, and 265°C was maintained for 30-45 minutes. During this time, the pressure inside the sealed tube was gradually reduced from atmospheric pressure to 25 kPa. After holding at 265°C, the temperature was raised from 265°C to 275°C at 2°C/min, and 275°C was maintained for 30-45 minutes. During this time, the pressure was gradually reduced from 25 kPa to 5 kPa. After holding at 275°C, the temperature was raised from 275°C to 280°C at 2°C/min, and 280°C was maintained for 30-45 minutes. During this time, the pressure was gradually reduced from 5 kPa to 1 kPa. After holding at 280°C, the temperature was raised from 280°C to 285°C at 2°C/min, and 285°C was maintained for 30-45 minutes. During this time, the pressure inside the sealed tube was gradually reduced from 1 kPa to as low a vacuum as the equipment could achieve. After the 285°C holding period, the sealed tube was filled with Ar to approximately atmospheric pressure and allowed to cool, and the solidified PET was removed. Hereinafter, PET obtained using crystals (NMP), crystals (DMI), and commercial TPA as starting materials are referred to as melt-polymerized PET (NMP), melt-polymerized PET (DMI), and melt-polymerized PET (commercial), respectively.

### Synthesis of PET by Solid-State Polymerization

Melt-polymerized PET (NMP), melt-polymerized PET (DMI), or melt-polymerized PET (commercial) obtained by the above (Synthesis of PET by Melt Polymerization) was subjected to solid-state polymerization, in which polymerization is carried out below the melting point, to obtain highmolecular-weight PET. Specifically, an empty glass sealed tube was weighed, and the PET obtained by the above (Synthesis of PET by Melt Polymerization) was cut into approximately 5 mm squares, charged into the glass sealed tube, and weighed. The inside of the glass sealed tube was then depressurized to 0.5 kPa or less using a vacuum pump. Subsequently, to dry residual moisture in the polymer chains of the PET, the temperature was raised to 140°C at 5°C/min and then maintained at 140°C for 2-3 hours. Immediately thereafter, the temperature was raised to 220°C at 5°C/min and maintained at 220°C for 4 hours. All heating was performed while continuously evacuating with a vacuum pump to maintain the pressure inside the glass sealed tube at a low level. After heating at 220°C, the glass sealed tube was cooled to room temperature while maintaining the reduced pressure state. The glass sealed tube was then filled with Ar gas to approximately atmospheric pressure and the PET was removed. Hereinafter, PET obtained from low-molecular-weight PET (NMP), low-molecular-weight PET (DMI), and low-molecular-weight PET (commercial) are referred to as solid-state polymerized PET (NMP), solid-state polymerized PET (DMI), and solid-state polymerized PET (commercial), respectively.

Melt-polymerized PET (NMP), solid-state polymerized PET (NMP), and an empty PET bottle of "I LOHAS" (registered trademark) Natural Water (manufactured by The Coca-Cola Company) as PET were subjected to DSC measurement. The crystallization temperatures were 108°C, 133°C, and 131°C, respectively, and the melting points were 225°C, 230°C, and 254°C, respectively. The crystallization temperature of melt-polymerized PET (NMP) was lower than that of the PET bottle; however, the crystallization temperature of solid-state polymerized PET (NMP) was comparable. This suggests that the degree of polymerization was sufficiently improved by solid-state polymerization.

Melt-polymerized PET (DMI), melt-polymerized PET (commercial), solid-state polymerized PET (DMI), and an empty PET bottle of "I LOHAS" (registered trademark) Natural Water (manufactured by The Coca-Cola Company) were subjected to GPC analysis. The number-average molecular weights were 9,400, 7,800, 24,500, and 29,300, respectively. The number-average molecular weights of melt-polymerized PET (DMI) and melt-polymerized PET (commercial) were lower than that of the PET bottle; however, the number-average molecular weight of solid-state polymerized PET (DMI) was comparable. This suggests that the number-average molecular weight was sufficiently improved by solid-state polymerization.

Melt-polymerized PET (DMI), melt-polymerized PET (commercial), solid-state polymerized PET (DMI), and an empty PET bottle of "I LOHAS" (registered trademark) Natural Water (manufactured by The Coca-Cola Company) were subjected to DSC measurement. The crystallization temperatures were 90°C, 107°C, 129°C, and 131°C, respectively, and the melting points were 242°C, 254°C, 249°C, and 255°C, respectively. The crystallization temperatures of melt-polymerized PET (DMI) and melt-polymerized PET (commercial) were lower than that of the PET bottle; however, the crystallization temperature of solid-state polymerized PET (DMI) was comparable to that of the PET bottle. This suggests that the degree of polymerization was sufficiently improved by solid-state polymerization. Furthermore, the melting points of melt-polymerized PET (DMI), melt-polymerized PET (commercial), and solid-state polymerized PET (DMI) were comparable to that of the PET bottle. From these results, solid-state polymerized PET (DMI) is considered to have properties comparable to those of an empty "I LOHAS" (registered trademark) Natural Water (manufactured by The Coca-Cola Company) PET bottle.

### Test Example E2

In Test Example E2, obtaining BHET by esterification or transesterification of the depolymerization product and related matters are described in detail with specific examples.

1.0 g of the depolymerization product was charged into a glass test tube together with a magnetic stir bar, and 3.0 mL of reagent ethylene glycol was further added. The glass test tube was heated and stirred at 100°C. A portion of the contents was removed at 1 hour and 24 hours after the start of heating and cooled to room temperature, whereupon crystals formed. The crystals were subjected to HPLC analysis using the method described above, and the composition of the crystals was confirmed. The results are shown in Table 10 below. The numerical values in Table 10 show the molar fraction (mol%) of each component relative to the total amount of substance of TPA, MCET, BCET, and BHET.

**Table 10 - Composition Changes During Esterification/Transesterification with Ethylene Glycol**

| Component | Before heating/stirring (mol%) | After 1 hour (mol%) | After 24 hours (mol%) |
|---|---|---|---|
| TPA | 13.3 | 3.8 | 0.2 |
| MCET | 60.0 | 30.4 | 1.6 |
| BCET | 26.7 | 43.7 | 1.2 |
| BHET | 0.0 | 22.2 | 97.0 |

As shown in Table 10, TPA, MCET, and BCET contained in the depolymerization product were converted to BHET by esterification or transesterification upon heating at 100°C in ethylene glycol. Furthermore, the majority of TPA, MCET, and BCET contained in the depolymerization product had been converted to BHET by esterification or transesterification after 24 hours.

### Test Example E3

In Test Example E3, the depolymerization product was solvent-separated using toluene (Test Example E3-0), and the resulting toluene-insoluble fraction (Test Example E3-1) and toluene-soluble fraction (Test Example E3-2) were each hydrolyzed to obtain TPA.

### Test Example E3-0

Pieces of an empty PET bottle of "I LOHAS" (registered trademark) Natural Water (manufactured by The Coca-Cola Company) as PET and PVC (JAN: 4987481347557, manufactured by Fujifilm Wako Pure Chemical Corporation) were weighed at a mass ratio of 3:1, and heated in a vacuum glass tube at 330°C to obtain PET depolymerization product. To 4.0 g of this depolymerization product, 10 mL of toluene was added and shaken. This was centrifuged, and the upper toluene phase containing the toluene-soluble fraction was transferred to a separate container. Subsequently, the operations of adding 10 mL of toluene to the residual toluene-insoluble solid, shaking, and transferring the toluene phase to the container were repeated 5 times. This yielded a toluene phase containing the toluene-soluble fraction and the toluene-insoluble fraction.

Based on the results of Example D, the toluene phase containing the toluene-soluble fraction can be said to contain BCET, and the toluene-insoluble fraction can be said to contain MCET and TPA.

### Test Example E3-1

The toluene-insoluble fraction obtained in (Test Example E3-0) was dried under vacuum to remove toluene, yielding 2.0 g of toluene-insoluble fraction. 20 mL of water was added to 2.0 g of this toluene-insoluble fraction, and the mixture was boiled with stirring in a test tube. After boiling was continued for 24 hours, the resulting powder was separated by filtration and vacuum dried. The mass of the obtained powder was measured, and the purity of TPA, WI, and YI were measured. The yield of TPA was calculated after evaluating the total amount of MCET and TPA in the toluene-insoluble fraction, as: (amount of substance of TPA in the crystals) / (total amount of substance of MCET and TPA in the toluene-insoluble fraction) × 100 (%). The results are shown in Table 11 below.

### Test Example E3-2

To the toluene phase containing the toluene-soluble fraction obtained in (Test Example E3-0), 9 mL of a 0.6 M NaOH aqueous solution was added, and the mixture was sealed in a glass container and heated and stirred at 75°C for 24 hours. Subsequently, the lower aqueous phase was separated and recovered, and 2 M HCl aqueous solution was added until crystal precipitation ceased. The precipitated crystals were collected by filtration under reduced pressure and vacuum dried. The mass of the obtained crystals was measured, and the purity of TPA, WI, and YI were measured. The yield of TPA was calculated after evaluating the amount of BCET in the toluene phase, as: (amount of substance of TPA in the crystals) / (amount of substance of BCET in the toluene phase) × 100 (%). The results are shown in Table 11 below.

**Table 11 - TPA Yield, Purity, WI, and YI (Test Examples E3-1 and E3-2)**

| | Hydrolysis target | TPA yield (%) | TPA purity (mol%) | WI | YI |
|---|---|---|---|---|---|
| Test Example E3-1 | Toluene-insoluble fraction | 92.9 | >95 | 89.7 | 5.7 |
| Test Example E3-2 | Toluene-soluble fraction | 77 | >95 | - | - |

As shown in Table 11, it was demonstrated that high-purity TPA crystals can be obtained by hydrolyzing either the toluene-insoluble fraction or the toluene-soluble fraction. Note that, as described above, hydrolysis of the toluene-insoluble fraction proceeded by boiling in water, demonstrating that no alkaline components such as NaOH are required. Therefore, by solvent-separating the depolymerization product using toluene and separately hydrolyzing the toluene-insoluble fraction and toluene-soluble fraction, the amount of alkaline components such as NaOH used can be reduced compared to directly hydrolyzing the depolymerization product without separation. Furthermore, the crystals obtained by hydrolyzing the toluene-insoluble fraction had high WI and low YI, which is considered to be attributable, among other factors, to the separation of impurities causing coloration in the depolymerization product, such as PVC plasticizers, into the toluene-soluble fraction.

### [Example F]

In Example F, TPA was obtained by hydrolysis and purification with activated carbon of the depolymerization product obtained in [Example A] Test Example 19, as described below. As described above, HPLC and ¹H-NMR analysis of the depolymerization product demonstrated that it contains TPA, BCET, and MCET.

### HPLC Conditions (Example F)

The TPA content of the measurement target in Example F was measured by the following HPLC method. First, 0.100 g of the solid measurement target was weighed and dissolved in 40 mL of DMF to obtain a solution, and 0.300 mL was added to 40 mL of the following mobile phase. The resulting solution was subjected to HPLC to analyze TPA content. The HPLC method was set as follows:
Temperature: 40°C; Pressure: 50.0 MPa; Column flow rate: 0.30 mL/min; Column type: AQ-C18 1.9 µm; Mobile phase: mixed solution of 0.05 vol% phosphoric acid aqueous solution:methanol = 65:35; Detection wavelength: 236 nm (wavelength 1), 254 nm (wavelength 2)

The yield of TPA was determined in the same manner as in Test Examples E1-3.

To 1.0 g of the depolymerization product, 10 mL of a 1.3 M NaOH aqueous solution was added, and 1.0 g of activated carbon (Fujifilm Wako Pure Chemical Corporation, activated carbon, crushed form, 0.2-1 mm) was added, and the mixture was heated and stirred at 90°C for 5 hours. Subsequently, the activated carbon was separated by filtration under reduced pressure to obtain the filtrate. 10 mL of 2.0 M dilute hydrochloric acid was added to the obtained filtrate, and the generated TPA was collected by filtration under reduced pressure and dried under vacuum to remove moisture. The mass of the obtained TPA was measured, and the yield, purity, WI, and YI were measured. For comparison, the WI and YI of the depolymerization product and a commercial TPA reagent (manufactured by Tokyo Chemical Industry Co., Ltd.) were also measured. These results are shown in Table 12. In Table 12, "Test Example F" refers to the TPA obtained as described above.

**Table 12 - Properties of TPA from Test Example F vs. Depolymerization Product and Commercial TPA**

| | TPA yield (%) | TPA purity (mol%) | WI | YI |
|---|---|---|---|---|
| Test Example F | 92.5 | >95 | 98.0 | 1.6 |
| Depolymerization product | - | - | 80.4 | 20.3 |
| Commercial TPA | - | - | 94.0 | 2.2 |

As shown in Table 12, the WI of the TPA obtained as described above was greater than that of commercial TPA, and the YI of the TPA obtained as described above was smaller than that of commercial TPA. From these results, it was demonstrated that using activated carbon strongly improves the purity of TPA obtained from the depolymerization product as a recycling feedstock, strongly improves WI, and strongly reduces YI.

### DESCRIPTION OF REFERENCE SIGNS

1: pyrolysis furnace; 2: plastic supply port; 3: trap unit; 4, 5, 8: pipes; 9: cooling section; 10: processing furnace; 11: heating zone; 12: cooling zone; 13: outlet; 14: exhaust port; 20: first container; 22: second container; 24: third container; 26: fourth container; 28: fifth container; 30: first communication pipe; 32: second communication pipe; 32a: pressure gauge; 32b: circulation pump; 32c: flow meter; 34: third communication pipe; 34a: stopcock; 36: fourth communication pipe; 36a: pump; 36b: stopcock; 36c: stopcock; 101: plastic processing apparatus; 102: plastic processing apparatus; 104: apparatus used in the production method for producing a depolymerization product containing a carboxylic acid or a derivative thereof from a resin mixture containing Polymer E; 106: apparatus used in the production method for producing a residue for recycling and the like.

## Claims

1. A method for producing a residue for recycling, comprising: applying a resin mixture comprising a polymer having ester bonds (Polymer E) with a depolymerization agent for Polymer E, thereby generating a depolymerization product; removing the depolymerization product; and recovering a residue having a reduced content of Polymer E.

2. The production method according to claim [1], wherein the depolymerization agent comprises at least one selected from the group consisting of hydrogen chloride and chlorine.

3. The production method according to claim [1] or [2], wherein the resin mixture comprises a polymer having chlorine atoms (Polymer C), and the depolymerization agent comprises hydrogen chloride generated by thermal decomposition of Polymer C.

4. The production method according to any one of claims [1] to [3], wherein the depolymerization product is a carboxylic acid or a derivative thereof.

5. The production method according to any one of claims [1] to [4], wherein the depolymerization product is removed in a gaseous state.

6. The production method according to any one of claims [1] to [5], wherein Polymer E is a polyester.

7. The production method according to any one of claims [1] to [6], wherein the resin mixture is applied with the depolymerization agent for Polymer E in a heated state.

8. The production method according to claim [7], wherein the heated state is 600°C or below.

9. A method for producing a depolymerization product comprising a carboxylic acid or a derivative thereof from a resin comprising a polymer having ester bonds (Polymer E), the method comprising: applying the resin with a depolymerization agent for Polymer E, thereby generating the depolymerization product in a gaseous state; separating the gaseous depolymerization product from the depolymerization reaction system; and condensing the separated depolymerization product as a solid.

10. The production method according to claim [9], wherein the resin contained in a first vessel is applied with the depolymerization agent for Polymer E, and the depolymerization product in a gaseous state is directed into a second vessel, thereby separating the depolymerization product from the depolymerization reaction system.

11. The production method according to claim [10], wherein the depolymerization agent is directed into the second vessel together with the depolymerization product, and at least a portion of the depolymerization agent directed into the second vessel is returned in a gaseous state to the first vessel.

12. The production method according to any one of claims [9] to [11], wherein the depolymerization agent comprises at least one selected from the group consisting of hydrogen chloride and chlorine.

13. The production method according to any one of claims [9] to [11], wherein the resin is a resin mixture comprising a polymer having chlorine atoms (Polymer C), and the depolymerization agent is obtained from thermal decomposition of Polymer C.

14. The production method according to any one of claims [9] to [13], wherein Polymer E is a polyester.

15. The production method according to any one of claims [9] to [14], wherein the depolymerization agent for Polymer E is applied with the resin in a heated state.

16. The production method according to claim [15], wherein the heated state is 600°C or below.

17. A method for producing terephthalic acid crystals, comprising: applying a resin comprising a reaction product of a diol and terephthalic acid with hydrogen chloride, thereby generating a depolymerization product comprising terephthalic acid and an ester of a chloroalcohol in which one hydroxyl group of the diol is substituted with a chlorine atom; hydrolyzing the ester in the depolymerization product so as to increase the content of terephthalic acid in the depolymerization product; and crystallizing the terephthalic acid during and/or after the hydrolysis.

18. The production method according to claim [17], wherein the resin is polyethylene terephthalate, and the ester is mono(2-chloroethyl) terephthalate and bis(2-chloroethyl) terephthalate.

19. The production method according to claim [17] or [18], wherein the depolymerization product is hydrolyzed in a heated solvent containing water.

20. The production method according to claim [19], wherein the solvent is an aprotic polar solvent.

21. A method for producing bis(2-hydroxyethyl) terephthalate crystals, comprising: applying a resin comprising a reaction product of a diol and terephthalic acid with hydrogen chloride, thereby generating a depolymerization product comprising terephthalic acid and an ester of a chloroalcohol in which one hydroxyl group of the diol is substituted with a chlorine atom; subjecting the depolymerization product to esterification or transesterification, thereby generating bis(2-hydroxyethyl) terephthalate; and crystallizing the bis(2-hydroxyethyl) terephthalate.

22. The production method according to claim [21], wherein the resin is polyethylene terephthalate, and the ester comprises mono(2-chloroethyl) terephthalate and bis(2-chloroethyl) terephthalate.

23. The production method according to claim [21] or [22], wherein the esterification or transesterification of the depolymerization product is performed with ethylene glycol.

24. The production method according to claim [23], wherein the esterification or transesterification of the depolymerization product is performed in heated ethylene glycol.

25. A method for producing a recycling feedstock comprising bis(2-chloroethyl) terephthalate (BCET), comprising: applying a depolymerization product with a solvent, the depolymerization product being generated by applying a resin comprising polyethylene terephthalate with hydrogen chloride and comprising terephthalic acid, mono(2-chloroethyl) terephthalate (MCET), and BCET; removing an insoluble matter comprising the terephthalic acid and the MCET; and obtaining the BCET dissolved in the solvent; wherein the solubility of terephthalic acid, MCET, and BCET in the solvent is 1 mass% or less, 3 mass% or less, and 3 mass% or more, respectively.

26. The production method according to claim [25], wherein the solvent is at least one solvent selected from the group consisting of aromatic hydrocarbon solvents, aliphatic hydrocarbon solvents, and ether solvents.

27. A method for producing a recycling feedstock comprising mono(2-chloroethyl) terephthalate (MCET), comprising: applying a depolymerization product with a first solvent, the depolymerization product being generated by applying a resin comprising polyethylene terephthalate with hydrogen chloride and comprising terephthalic acid, MCET, and BCET; separating the BCET dissolved in the first solvent from an insoluble matter comprising the terephthalic acid and the MCET that is insoluble in the first solvent; applying the insoluble matter with a second solvent; removing an insoluble matter comprising the terephthalic acid that is insoluble in the second solvent; and obtaining the MCET dissolved in the second solvent; wherein the solubility of terephthalic acid, MCET, and BCET in the first solvent is 1 mass% or less, 3 mass% or less, and 3 mass% or more, respectively; and the solubility of terephthalic acid and MCET in the second solvent is 1 mass% or less and 1 mass% or more, respectively.

28. The production method according to claim [27], wherein the first solvent is at least one solvent selected from the group consisting of aromatic hydrocarbon solvents, aliphatic hydrocarbon solvents, and ether solvents.

29. The production method according to claim [27] or [28], wherein the second solvent is at least one solvent selected from the group consisting of ether solvents, ketone solvents, ester solvents, and alcohol solvents.

30. A method for producing a recycling feedstock comprising terephthalic acid, comprising: applying a depolymerization product with a first solvent, the depolymerization product being generated by applying a resin comprising polyethylene terephthalate with hydrogen chloride and comprising terephthalic acid, MCET, and BCET; separating the BCET dissolved in the first solvent from an insoluble matter comprising the terephthalic acid and the MCET that is insoluble in the first solvent; applying the insoluble matter with a second solvent; and obtaining an insoluble matter comprising the terephthalic acid that is insoluble in the second solvent; wherein the solubility of terephthalic acid, MCET, and BCET in the first solvent is 1 mass% or less, 3 mass% or less, and 3 mass% or more, respectively; and the solubility of terephthalic acid and MCET in the second solvent is 1 mass% or less and 1 mass% or more, respectively.

31. The production method according to claim [30], wherein the first solvent is at least one solvent selected from the group consisting of aromatic hydrocarbon solvents, aliphatic hydrocarbon solvents, and ether solvents.

32. The production method according to claim [30] or [31], wherein the second solvent is at least one solvent selected from the group consisting of ether solvents, ketone solvents, ester solvents, and alcohol solvents.

33. A method for producing terephthalic acid crystals, comprising: applying a depolymerization product with a solvent, the depolymerization product being generated by applying a resin comprising polyethylene terephthalate with hydrogen chloride and comprising terephthalic acid, MCET, and BCET; removing an insoluble matter comprising the terephthalic acid and the MCET that is insoluble in the solvent; obtaining the BCET dissolved in the solvent; hydrolyzing the obtained BCET; and crystallizing the terephthalic acid during and/or after the hydrolysis; wherein the solubility of terephthalic acid, MCET, and BCET in the solvent is 1 mass% or less, 3 mass% or less, and 3 mass% or more, respectively.

34. The production method according to claim [33], wherein the solvent is at least one solvent selected from the group consisting of aromatic hydrocarbon solvents, aliphatic hydrocarbon solvents, and ether solvents.

35. A method for producing terephthalic acid crystals, comprising: applying a depolymerization product with a solvent, the depolymerization product being generated by applying a resin comprising polyethylene terephthalate with hydrogen chloride and comprising terephthalic acid, MCET, and BCET; separating the BCET dissolved in the solvent from an insoluble matter comprising the terephthalic acid and the MCET that is insoluble in the solvent; hydrolyzing the insoluble matter so as to increase the content of terephthalic acid therein; and crystallizing the terephthalic acid during and/or after the hydrolysis; wherein the solubility of terephthalic acid, MCET, and BCET in the solvent is 1 mass% or less, 3 mass% or less, and 3 mass% or more, respectively.

36. The production method according to claim [35], wherein the solvent is at least one solvent selected from the group consisting of aromatic hydrocarbon solvents, aliphatic hydrocarbon solvents, and ether solvents.
